# EUROPEAN PATENT SPECIFICATION

(11) **EP 4 289 495 B1**
(45) Date of publication and mention of the grant of the patent: **18.11.2026**
(21) Application number: 22749748.4
(22) Date of filing: 02.02.2022
(51) Int. Cl.: B01D 39/16, B32B 5/18, B32B 27/30, C08L 27/18, C08J 9/00, C08K 3/013, A62B 18/02, A62B 23/02, B01D 39/10, B01D 46/12, B01D 71/36, B01D 69/12, B01D 69/02, C08J 5/22, C08J 9/28, B32B 27/32, B32B 27/12, B01D 46/52, A41D 13/11, B01D 39/08, B01D 46/00

(54) **AIR FILTER FILTRATION MATERIAL, METHOD FOR PRODUCING AIR FILTER FILTRATION MATERIAL, MASK AND PLEATED MASK**
LUFTFILTERFILTRATIONSMATERIAL, VERFAHREN ZUR HERSTELLUNG VON LUFTFILTERFILTRATIONSMATERIAL, MASKE UND FALTENMASKE
MATÉRIAU DE FILTRATION DE FILTRE À AIR, PROCÉDÉ DE PRODUCTION DE MATÉRIAU DE FILTRATION DE FILTRE À AIR, MASQUE ET MASQUE DE TYPE PLISSÉ

(30) Priority: 04.02.2021 JP 2021016674
(43) Date of publication of application: 13.12.2023
(73) Proprietor: DAIKIN INDUSTRIES, LTD., Osaka 530-0001 (JP)
(72) Inventor: KIYOTANI, Hideyuki, Osaka-shi, Osaka 530-0001 (JP); INUI, Kunihiko, Osaka-shi, Osaka 530-0001 (JP); URAOKA, Nobuki, Osaka-shi, Osaka 530-0001 (JP); SHIBUYA, Yoshiyuki, Osaka-shi, Osaka 530-0001 (JP)
(74) Representative: Hoffmann Eitle
(86) International application number: PCT/JP2022/004068
(87) International publication number: WO 2022/168877

(56) References cited:
- EP-A1- 3 569 300
- EP-B1- 2 840 115
- WO-A1-2013/157647
- WO-A1-94/16802

## Description

### TECHNICAL FIELD

The present disclosure relates to an air filter medium, a method for producing an air filter medium, a mask filter medium, and a pleated mask filter medium.

### BACKGROUND ART

Conventionally, for example, porous membranes (hereafter referred to as PTFE porous membranes) formed of polytetrafluoroethylene (hereafter may be referred to as PTFE) are used as air filters. Such a PTFE porous membrane has a higher collection efficiency of dust than glass fiber filter media at the same pressure loss, and therefore is particularly suitably used for HEPA filters (high efficiency particulate air filters) and ULPA filters (ultra low penetration air filters).

For example, an air filter medium disclosed in WO 2013/157647 and having a PTFE porous membrane with good performance has been proposed as such a filter.

EP 2 840 115 B1 describes a porous membrane used as a filtering medium for a filter to capture fine particles in fluid, in which the porous membrane contains fibrils including polytetrafluoroethylene that can be fibrillated, and knotted portions containing polytetrafluoroethylene that can be fibrillated, and the knotted portions further contain a non-hot melt processable component that is not fibrillated and also a hot melt processable component with a melting point of lower than 320°C that is not fibrillated, wherein the hot melt processable component that is not fibrillated is contained at being equal to or more than 0.1 % by weight but less than 20% by weight of the total components forming the porous membrane.

EP 3 569 300 A1 describes an air filter medium that collects dust in gas includes a main collection layer and a pre-collection layer that has a lower collection efficiency of NaCI particles having a particle size of 0.3 pm than the main collection layer, is disposed on an upstream side of an air flow with respect to the main collection layer, and has water repellency.

### SUMMARY OF THE INVENTION

### <Technical Problem>

However, the air filter medium having a fluororesin porous membrane is required to have a low pressure loss, to have high performance, and to be less likely to cause clogging.

### <Solution to Problem>

The present invention is defined by the appended set of claims 1 to 7.
An air filter medium according to claim 1 is an air filter medium including a fluororesin porous membrane and a supporting member stacked on the fluororesin porous membrane. The fluororesin porous membrane has a pressure loss of 80 Pa or less when air is passed at a flow rate of 5.3 cm/s. The fluororesin porous membrane has a PF of 20 or more. The PF is determined from a formula PF = {-log((100 - collection efficiency (%))/100)}/(pressure loss (Pa)/1000) using the pressure loss and a collection efficiency determined using NaCl particles having a particle size of 0.1 µm. The fluororesin porous membrane has a thickness of 10 µm or more. The fluororesin porous membrane has a dust-holding capacity of 15.0 g/m² or more. The dust-holding capacity refers to a dust-holding capacity of polyalphaolefin particles having a number median diameter of 0.25 µm when air containing the polyalphaolefin particles is continuously passed through the fluororesin porous membrane at a flow rate of 5.3 cm/s and the pressure loss of the fluororesin porous membrane increases by 250 Pa. The air filter medium has a low pressure loss because the fluororesin porous membrane has a pressure loss of 80 Pa or less. This air filter medium has high performance because the fluororesin porous membrane has a PF of 20 or more. In this air filter medium, clogging is less likely to occur because the fluororesin porous membrane has a dust-holding capacity of 15.0 g/m² or more.

Each of the pressure loss, PF, and dust-holding capacity of the fluororesin porous membrane can be values in a non-charged state in which the fluororesin porous membrane is not charged. Note that the air filter medium in a non-charged state refers to an air filter medium in a state in which electrification is not caused by being subjected to a static elimination treatment conforming to "JIS B 9908-4, Part 4: Test Method for Static Elimination Treatment of Ventilating Air Filter Unit". As compared with electret filters or the like, even when the fluororesin porous membrane changes from a charged state to a non-charged state, a decrease in collection efficiency is suppressed and the collection efficiency is maintained.

An air filter medium according to claim 2 is the air filter medium according to claim 1, wherein the fluororesin porous membrane has a thickness of 50 µm or less.

This air filter medium can have a small thickness.

An air filter medium according to a further aspect is the air filter medium according to claim 1, wherein a coefficient of variation of the pressure loss of the air filter medium is 6.0 or less.

The coefficient of variation of pressure loss means a value obtained by dividing the standard deviation of the pressure loss distribution by the average.

In fluororesin porous membranes having a low pressure loss, the pressure loss is likely to vary at positions of the membrane. However, this air filter medium has good uniformity because the coefficient of variation of pressure loss is reduced.

An air filter medium according to claim 3 is the air filter medium according to claims 1 or 2, wherein the fluororesin porous membrane contains a fibrillatable polytetrafluoroethylene, a non-fibrillatable non-melt-fabricable component, and a non-fibrillatable melt-fabricable component having a melting point of lower than 320°C.

This air filter medium is allowed to have a high dust-holding capacity because the thickness of the fluororesin porous membrane can be increased by increasing the number of voids using relatively thick fibers.

An air filter medium according to claim 4 is the air filter medium according to claims 1 to 3, wherein the fluororesin porous membrane contains a modified polytetrafluoroethylene.

This air filter medium is allowed to have a high dust-holding capacity because a large thickness is easily ensured.

The method for producing an air filter medium is a method according to claim 5.

According to this method for producing an air filter medium, it is possible to easily obtain an air filter medium that has a low pressure loss, has high performance, and is less likely to cause clogging.

The mask filter medium is a mask filter medium according to claim 6 and includes the air filter medium of any one of claims 1 to 4 or an air filter medium produced by the method of claim 5.

This mask filter medium has reduced breathing difficulty during use, has high performance, and is less likely to cause clogging.

The pleated mask filter medium is a pleated mask filter medium according to claim 7.

Even after the load is applied, this pleated mask filter medium can be used while breathing difficulty is reduced.

### BRIEF DESCRIPTION OF THE DRAWINGS

[Fig. 1] Fig. 1 is a schematic sectional view illustrating a layer structure of an air filter medium (part one).
[Fig. 2] Fig. 2 is a schematic sectional view illustrating a layer structure of an air filter medium (part two).
[Fig. 3] Fig. 3 is a schematic sectional view illustrating a layer structure of an air filter medium (part three).
[Fig. 4] Fig. 4 is an external perspective view of a pleated mask filter medium.
[Fig. 5] Fig. 5 is a front view of a pleated mask filter medium being attached to a base.
[Fig. 6] Fig. 6 is a side sectional view of a pleated mask filter medium being attached to a base.

### DESCRIPTION OF EMBODIMENTS

Hereafter, an air filter medium (hereafter also simply referred to as a filter medium), a method for producing the air filter medium, a mask filter medium, and a pleated mask filter medium will be described based on examples.

### (1) Air filter medium

The air filter medium includes a fluororesin porous membrane and a supporting member. The supporting member is stacked on the fluororesin porous membrane in the thickness direction.

The pressure loss of the air filter medium may be 80 Pa or less and is preferably 75 Pa or less. The pressure loss of the air filter medium is not limited, and may be 20 Pa or more. The pressure loss of the air filter medium can be measured as a pressure loss given when air is passed through the medium at a flow rate of 5.3 cm/s.

The physical properties of the air filter medium described in the present embodiment and a fluororesin porous membrane described later are values in a non-charged state in which the air filter medium and the fluororesin porous membrane are each not charged. Note that the non-charged state refers to a state in which electrification is not caused by being subjected to a static elimination treatment conforming to "JIS B 9908-4, Part 4: Test Method for Static Elimination Treatment of Ventilating Air Filter Unit". Some publicly known filter media have good collection efficiency and the like when used in a charged state. However, when such a filter medium is used in a wet state or when the charged state cannot be maintained due to moisture or the like contained in human breath, the collection efficiency and the like are not maintained in a favorable manner. In contrast, even when the air filter medium and the fluororesin porous membrane according to the present embodiment are in a non-charged state, a decrease in collection efficiency is suppressed, and the collection efficiency is favorably maintained.

For the air filter medium, a PF is preferably 20 or more, the PF being calculated from the formula PF = {-log((100 - collection efficiency (%))/100)}/(pressure loss (Pa)/1000) using the pressure loss given when air is passed at a flow rate of 5.3 cm/s and the collection efficiency determined from NaCl particles having a particle size of 0.1 µm.

The thickness of the air filter medium is, for example, preferably 200 µm or more and 500 µm or less. The thickness of the air filter medium is a thickness measured when a load of 0.3 N is imposed on a measurement target in a particular measuring instrument.

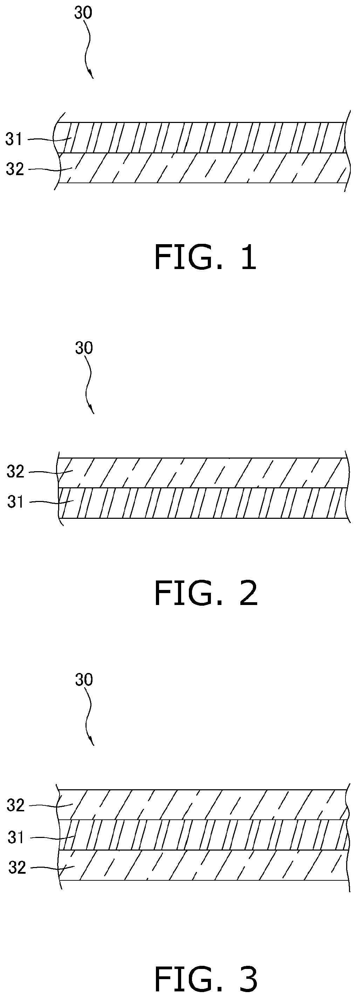

The specific layer structure of the above-described air filter medium is not limited. For example, as in an air filter medium 30 in Fig. 1, the air filter medium may include a fluororesin porous membrane 31 and an air-permeable supporting member 32 stacked downstream of the fluororesin porous membrane 31 in an air flow direction. Alternatively, for example, as in an air filter medium 30 in Fig. 2, the air filter medium may include a fluororesin porous membrane 31 and an air-permeable supporting member 32 stacked upstream of the fluororesin porous membrane 31 in the air flow direction. Alternatively, for example, as in an air filter medium 30 in Fig. 3, the air filter medium may include a fluororesin porous membrane 31 and air-permeable supporting members 32 stacked both upstream and downstream of the fluororesin porous membrane 31 in the air flow direction.

The method for stacking these membranes, layers, and the like is not limited. The membranes and layers may be bonded to each other by using an anchor effect provided by partial melting through heating or melting of a hot-melt resin, may be bonded to each other by using a reactive adhesive or the like, or may be simply placed on top of each other.

Each layer and the relationship between the layers will be exemplified below.

### (2) Fluororesin porous membrane

The fluororesin porous membrane has a pressure loss of 80 Pa or less, preferably 75 Pa or less, and more preferably 72 Pa or less when air is passed through the membrane at a flow rate of 5.3 cm/s. The pressure loss of the fluororesin porous membrane is not limited, and may be 20 Pa or more. The pressure loss of the fluororesin porous membrane is preferably 40 Pa or more from the viewpoint of easily obtaining a fluororesin porous membrane having good uniformity in the entire membrane while suppressing a decrease in collection efficiency.

The PF of the fluororesin porous membrane is 20 or more, and more preferably 22 or more. The PF is a value determined from the formula PF = {-log((100 - collection efficiency (%))/100)}/(pressure loss (Pa)/1000) using the pressure loss given when air is passed through the membrane at a flow rate of 5.3 cm/s and the collection efficiency determined from NaCl particles having a particle size of 0.1 µm.

The fluororesin porous membrane has a thickness of 10 µm or more. This makes it easy to obtain a porous membrane having an increased dust-holding capacity for polyalphaolefin particles. The thickness of the fluororesin porous membrane is preferably 50 µm or less from the viewpoint of suppressing an excessive increase in the thickness of folded portions when the fluororesin porous membrane is used while having folded portions. The thickness of the fluororesin porous membrane is a thickness measured when a load of 0.3 N is imposed on a measurement target in a particular measuring instrument.

The fluororesin porous membrane has a dust-holding capacity for polyalphaolefin particles of 15.0 g/m² or more. The dust-holding capacity for polyalphaolefin particles means a weight per unit area of the polyalphaolefin particles held in the fluororesin porous membrane when air containing polyalphaolefin particles having a number median diameter of 0.25 µm is continuously passed through the fluororesin porous membrane at a flow rate of 5.3 cm/s and the pressure loss of the fluororesin porous membrane increases by 250 Pa. The dust-holding capacity is 15.0 g/m² or more. Therefore, even if a gas containing oil is passed through the air filter medium, an increase in the pressure loss of the air filter medium can be suppressed. As a result, the air filter medium can be continuously used while clogging is suppressed.

The coefficient of variation of the pressure loss is preferably 6.0 or less. The coefficient of variation (CV) of the pressure loss means a value obtained by dividing the standard deviation of the pressure loss distribution at some positions of the fluororesin porous membrane by the average of the pressure losses. In fluororesin porous membranes having a low pressure loss, the pressure loss is generally likely to vary at positions of the membrane. However, the air filter medium according to the present embodiment has a coefficient of variation of pressure loss of 6.0 or less. Therefore, even if the porous membrane has a low pressure loss, the uniformity of the membrane can be improved by being uniformly drawn. In particular, since mask filter media have a relatively small total area (for example, 500 cm² or less or 350 cm² or less), it is particularly desirable to suppress the formation of partially poor quality portions. Thus, an air filter medium capable of decreasing the coefficient of variation of pressure loss to is particularly suitable for use as a mask filter medium.

The filling factor of the fluororesin porous membrane may be substantially uniform in the thickness direction or may change in the thickness direction. The fluororesin porous membrane whose filling factor changes in the thickness direction is preferably a fluororesin porous membrane in which the filling factor of a portion on the windward side is lower than that of a portion on the leeward side (gradient density porous membrane).

The fluororesin porous membrane contains a fluororesin, preferably mainly contains a fluororesin, and more preferably has a porous membrane structure including fibrils (fibers, not illustrated) and nodes (nodal portions, not illustrated) connected to the fibrils. Herein, the term "mainly" means that when a plurality of components is contained, the fluororesin has the highest content. The fluororesin porous membrane may contain, for example, 50 wt% or more of a fluororesin relative to the weight of the fluororesin porous membrane, preferably contains 80 wt% or more of a fluororesin, and more preferably contains 95 wt% or more of a fluororesin. The fluororesin porous membrane may be constituted by only a fluororesin.

An example of the components other than the fluororesin in the fluororesin porous membrane is an inorganic filler that is a non-fibrillatable non-melt-fabricable component (B component) described later.

The fluororesin used for the fluororesin porous membrane may be formed of one component or two or more components. The fluororesin is also, for example, a fluororesin containing a fibrillatable PTFE (hereafter also referred to as an A component). The fluororesin is also, for example, a three-component mixture of the A component, a non-fibrillatable non-melt-fabricable component (hereafter also referred to as a B component), and a non-fibrillatable melt-fabricable component (hereafter also referred to as a C component) having a melting point of lower than 320°C.

### (2-1) A component: fibrillatable PTFE

The fibrillatable PTFE has, for example, drawability and non-melt fabricability. The term "non-melt fabricability" means that the polymer has a high melt viscosity and therefore does not readily flow in a molten state, which makes it difficult to perform melt fabrication. The fibrillatable PTFE preferably has a melt viscosity at 380°C of 1 × 10⁸ Pa·s or more.

The fibrillatable PTFE is, for example, a high-molecular-weight PTFE obtained through emulsion polymerization or suspension polymerization of tetrafluoroethylene (TFE). The high molecular weight herein is a molecular weight at which fibrillation is easily caused and fibrils having a large fiber length are obtained during drawing in the production of a porous membrane, the standard specific gravity (SSG) is 2.130 to 2.230, and the melt flow substantially does not occur because of the high melt viscosity. The SSG of the fibrillatable PTFE is preferably 2.130 to 2.190 and more preferably 2.140 to 2.170 from the viewpoint of achieving ease of fibrillation and providing fibrils having a large fiber length. An excessively high SSG may deteriorate the drawability. An excessively low SSG deteriorates the rollability and thus deteriorates the uniformity of the porous membrane, which may increase the pressure loss of the porous membrane. The standard specific gravity (SSG) is measured in conformity to ASTM D 4895.

From the viewpoint of achieving ease of fibrillation and providing fibrils having a large fiber length, a PTFE obtained through emulsion polymerization is preferred. Emulsion polymerization can be generally performed in an aqueous medium containing TFE, or TFE and a monomer other than TFE, a dispersant, and a polymerization initiator. The emulsion polymerization is preferably performed with gentle stirring under stirring conditions set so that the produced PTFE fine particles do not aggregate. In the emulsion polymerization, the polymerization temperature is generally 20 to 100°C and preferably 50 to 85°C. The polymerization pressure is generally 0.5 to 3.0 MPa. The polymerization initiator in the emulsion polymerization is preferably, for example, a radical polymerization initiator or a redox polymerization initiator. The amount of the polymerization initiator is preferably as small as possible from the viewpoint that production of PTFE having a low molecular weight is suppressed and PTFE having a low SSG can be obtained. However, when the amount is excessively small, the polymerization rate tends to be excessively low. When the amount is excessively large, PTFE having a high SSG tends to be produced.

PTFE may constitute a fine powder obtained by emulsion polymerization. The fine powder can be obtained by collecting PTFE fine particles from the PTFE aqueous dispersion obtained by the above-described emulsion polymerization, coagulating the PTFE fine particles, and then drying the coagulated fine particles. The fine powder formed of the PTFE has good extrudability, and can be paste-extruded at an extrusion pressure of, for example, 20 MPa or less. The extrusion pressure is a pressure measured when paste extrusion is performed through an orifice (diameter 2.5 cm, land length 1.1 cm, and entrance angle 30°) at a reduction ratio of 100, an extrusion speed of 51 cm/min, and a temperature of 25°C. In the paste extrusion, in general, the fine powder is mixed with an extrusion aid (lubricant), then premolded, and extruded. The extrusion aid is not limited, and a publicly known extrusion aid can be used. The extrusion aid is preferably a petroleum hydrocarbon having a boiling point of 150°C or higher, such as naphtha. The amount of the extrusion aid used varies depending on, for example, the kind of the extrusion aid, but is usually 5 parts by weight or more and 50 parts by weight or less (P) based on 100 parts by weight of the PTFE powder. The amount is preferably 10 parts by weight or more and 40 parts by weight or less and more preferably 25 parts by weight or more and 35 parts by weight or less. The premolding and extrusion can be performed by publicly known methods, and the conditions can be appropriately selected.

The presence or absence of fibrillability, that is, whether fibrillation is achieved or not can be judged by checking whether paste extrusion, which is a typical method for molding a high-molecular-weight PTFE powder obtained from a polymer of TFE, can be performed or not. Normally, paste extrusion can be performed because a high-molecular-weight PTFE has fibrillability. In the case where an unfired molded body obtained through paste extrusion substantially does not have strength or elongation, such as the case where the molded body has an elongation of 0% and is broken when stretched, such a molded body can be considered to have no fibrillability.

The high-molecular-weight PTFE may be a modified polytetrafluoroethylene (hereafter referred to as a modified PTFE), a homo-polytetrafluoroethylene (hereafter referred to as a homo-PTFE), or a mixture of a modified PTFE and a homo-PTFE. The content of the modified PTFE in the high-molecular-weight PTFE is preferably 10 wt% or more and 98 wt% or less and more preferably 50 wt% or more and 95 wt% or less from the viewpoint of favorably maintaining the moldability of polytetrafluoroethylene. Non-limiting examples of the homo-PTFE that can be suitably used include homo-PTFEs disclosed in Japanese Unexamined Patent Application Publication No. 53-60979, Japanese Unexamined Patent Application Publication No. 57-135, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, International Publication No. 2009/001894, International Publication No. 2010/113950, and International Publication No. 2013/027850. In particular, homo-PTFEs disclosed in Japanese Unexamined Patent Application Publication No. 57-135, Japanese Unexamined Patent Application Publication No. 63-137906, Japanese Unexamined Patent Application Publication No. 2000-143727, Japanese Unexamined Patent Application Publication No. 2002-201217, International Publication No. 2007/046345, International Publication No. 2007/119829, and International Publication No. 2010/113950 are preferred from the viewpoint of high drawability.

The modified PTFE is constituted by TFE and a monomer other than TFE (hereafter referred to as a modifying monomer). Non-limiting examples of the modified PTFE include PTFEs homogeneously modified by the modifying monomer, PTFEs modified at the beginning of polymerization reaction, and PTFEs modified at the end of polymerization reaction. The modified PTFE is preferably a TFE copolymer obtained by subjecting a trace amount of a monomer other than TFE to polymerization together with TFE without considerably impairing the properties of the TFE homopolymer. Examples of the modified PTFE that can be suitably used include modified PTFEs disclosed in Japanese Unexamined Patent Application Publication No. 60-42446, Japanese Unexamined Patent Application Publication No. 61-16907, Japanese Unexamined Patent Application Publication No. 62-104816, Japanese Unexamined Patent Application Publication No. 62-190206, Japanese Unexamined Patent Application Publication No. 64-1711, Japanese Unexamined Patent Application Publication No. 2-261810, Japanese Unexamined Patent Application Publication No. 11-240917, Japanese Unexamined Patent Application Publication No. 11-240918, International Publication No. 2003/033555, International Publication No. 2005/061567, International Publication No. 2007/005361, International Publication No. 2011/055824, and International Publication No. 2013/027850. In particular, modified PTFEs disclosed in Japanese Unexamined Patent Application Publication No. 61-16907, Japanese Unexamined Patent Application Publication No. 62-104816, Japanese Unexamined Patent Application Publication No. 64-1711, Japanese Unexamined Patent Application Publication No. 11-240917, International Publication No. 2003/033555, International Publication No. 2005/061567, International Publication No. 2007/005361, and International Publication No. 2011/055824 are preferred from the viewpoint of high drawability.

The modified PTFE contains a TFE unit based on TFE and a modifying monomer unit based on the modifying monomer. The modifying monomer unit is a moiety in a molecular structure of the modified PTFE, the moiety being derived from the modifying monomer. The content of the modifying monomer unit in all monomer units of the modified PTFE is preferably 0.001 to 0.500 wt% and more preferably 0.01 to 0.30 wt%. The all monomer units are moieties derived from all monomers in a molecular structure of the modified PTFE.

The modifying monomer is not limited as long as the modifying monomer is copolymerizable with TFE. Examples of the modifying monomer include perfluoroolefins such as hexafluoropropylene (HFP); chlorofluoroolefins such as chlorotrifluoroethylene (CTFE); hydrogen-containing fluoroolefins such as trifluoroethylene and vinylidene fluoride (VDF); perfluorovinyl ethers; and (perfluoroalkyl)ethylenes (PFAE) and ethylene. A single modifying monomer may be used or a plurality of modifying monomers may be used.

The perfluorovinyl ethers are not limited. For example, an unsaturated perfluoro compound represented by general formula (1) below can be used.

CF₂=CF-ORf ··· (1)

In the formula, Rf represents a perfluoro organic group.

In this specification, the perfluoro organic group is an organic group obtained by substituting all hydrogen atoms bonding to carbon atoms with fluorine atoms. The perfluoro organic group may contain ether oxygen.

An example of the perfluorovinyl ether is a perfluoro(alkyl vinyl ether) (PAVE) with Rf representing a perfluoroalkyl group having 1 to 10 carbon atoms in the general formula (1). The perfluoroalkyl group preferably has 1 to 5 carbon atoms. Examples of the perfluoroalkyl group in PAVE include, for example, a perfluoromethyl group, a perfluoroethyl group, a perfluoropropyl group, a perfluorobutyl group, a perfluoropentyl group, and a perfluorohexyl group. The PAVE is preferably perfluoro(propyl vinyl ether) (PPVE) or perfluoro(methyl vinyl ether) (PMVE).

The perfluoroalkyl ethylene (PFAE) is not limited, and examples thereof include perfluorobutyl ethylene (PFBE) and perfluorohexyl ethylene (PFHE).

The modifying monomer in the modified PTFE is preferably at least one monomer selected from the group consisting of HFP, CTFE, VDF, PAVE, PFAE, and ethylene.

When the fluororesin porous membrane is formed by using a B component and a C component described later, the content of the homo-PTFE in the fibrillatable PTFE is particularly preferably more than 50 wt% from the viewpoint of achieving ease of fibrillation and providing fibrils having a large fiber length.

When not only the fibrillatable PTFE (A component) but also a non-fibrillatable non-melt-fabricable component (B component) and a non-fibrillatable melt-fabricable component having a melting point of lower than 320°C (C component) are contained in the fluororesin porous membrane, the following components can be used as the B component and the C component. The fluororesin porous membrane formed of these three components has a membrane structure with a higher porosity and a larger thickness than known fibrillatable PTFE (high-molecular-weight PTFE) porous membranes. Therefore, fine particles in gas can be collected in a large region in a thickness direction of the filter medium, which can improve the dust-holding capacity. By forming the fluororesin porous membrane from these three components, the dust-holding capacity of liquid particles can be particularly increased rather than that of solid particles.

### (2-2) B component: non-fibrillatable non-melt-fabricable component

The non-fibrillatable non-melt-fabricable component is mainly unevenly distributed in the nodal portions as non-fibrous particles and has a function of suppressing fibrillation of the fibrillatable PTFE.

Examples of the non-fibrillatable non-melt-fabricable component include components having thermoplasticity, such as low-molecular-weight PTFEs; thermosetting resins; inorganic fillers; and mixtures of the foregoing.

The component having thermoplasticity preferably has a melting point of 320°C or higher and has as high a melt viscosity as possible. For example, the low-molecular-weight PTFE has a high melt viscosity and therefore can remain in the nodal portions even when processed at a temperature higher than or equal to the melting point. In this specification, the low-molecular-weight PTFE is a PTFE having a number-average molecular weight of 600,000 or less, a melting point of 320°C or higher and 335°C or lower, and a melt viscosity at 380°C of 100 Pa·s to 7.0 × 10⁵ Pa·s (refer to Japanese Unexamined Patent Application Publication No. 10-147617).

Examples of the method for producing a low-molecular-weight PTFE include a method in which a high-molecular-weight PTFE powder (molding powder) obtained through suspension polymerization of TFE or a high-molecular-weight PTFE powder (FP: fine powder) obtained through emulsion polymerization of TFE and a particular fluoride are thermally decomposed by causing a catalytic reaction at high temperature (refer to Japanese Unexamined Patent Application Publication No. 61-162503), a method in which the high-molecular-weight PTFE powder or a molded body is irradiated with ionizing radiation (refer to Japanese Unexamined Patent Application Publication No. 48-78252), and a method in which TFE is directly polymerized together with a chain transfer agent (refer to, e.g., International Publication No. 2004/050727, International Publication No. 2009/020187, and International Publication No. 2010/114033). The low-molecular-weight PTFE may be a homo-PTFE or the above-described modified PTFE containing a modifying monomer as in the case of the fibrillatable PTFE.

The low-molecular-weight PTFE has no fibrillability. The presence or absence of fibrillability can be judged by the above-described method. For the low-molecular-weight PTFE, an unfired molded body obtained through paste extrusion substantially does not have strength or elongation, such as an elongation of 0%, and is broken when stretched.

The low-molecular-weight PTFE is not limited, but preferably has a melt viscosity at 380°C of 1000 Pa·s or more, more preferably 5000 Pa·s or more, and further preferably 10000 Pa·s or more. At a high melt viscosity, even if the non-fibrillatable melt-fabricable component serving as a C component is melted during production of the porous membrane, the non-fibrillatable non-melt-fabricable component can remain in the nodal portions, which can suppress the fibrillation.

Examples of the thermosetting resin include epoxy resin, silicone resin, polyester resin, polyurethane resin, polyimide resin, phenolic resin, and mixtures of the foregoing resins. The thermosetting resin is desirably an uncured resin dispersed in water from the viewpoint of workability of co-coagulation. Each of these thermosetting resins is commercially available.

Examples of the inorganic filler include talc, mica, calcium silicate, glass fiber, calcium carbonate, magnesium carbonate, carbon fiber, barium sulfate, calcium sulfate, and mixtures of the foregoing. In particular, talc is preferably used from the viewpoint of specific gravity and affinity for a fibrillatable high-molecular-weight PTFE. The inorganic filler preferably has a particle size of 3 µm or more and 20 µm or less from the viewpoint of formation of a stable dispersion body during production of the porous membrane. The particle size is an average particle size measured by a laser diffraction/scattering method. Each of these inorganic fillers is commercially available.

The non-fibrillatable non-melt-fabricable component may contain the above-described components in a combined manner.

The content of the non-fibrillatable non-melt-fabricable component in the porous membrane is preferably 1 wt% or more and 50 wt% or less. When the content of the non-fibrillatable non-melt-fabricable component is 50 wt% or less, the fibrous structure of the porous membrane is easily maintained. The content of the non-fibrillatable non-melt-fabricable component is preferably 20 wt% or more and 40 wt% or less and more preferably 30 wt%. When the content is 20 wt% or more and 40 wt% or less, the fibrillation of the fibrillatable PTFE can be more effectively suppressed.

### (2-3) C component: non-fibrillatable melt-fabricable component having melting point of lower than 320°C

The non-fibrillatable melt-fabricable component having a melting point of lower than 320°C (hereafter also referred to as a non-fibrillatable melt-fabricable component) has flowability when melted. Therefore, the non-fibrillatable melt-fabricable component can be melted during production (drawing) of the porous membrane and cured in the nodal portions. This increases the strength of the whole porous membrane and thus can suppress the deterioration of filter performance even if the porous membrane is compressed, for example, in the downstream processes.

The non-fibrillatable melt-fabricable component preferably has a melt viscosity of less than 10000 Pa·s at 380°C. The melting point of the non-fibrillatable melt-fabricable component is a temperature at a peak top of a heat-of-fusion curve obtained when the component is heated to a temperature higher than or equal to the melting point at a temperature-increasing rate of 10 °C/min to be completely melted once, cooled to a temperature lower than or equal to the melting point at 10 °C/min, and then heated again at 10 °C/min using a differential scanning calorimeter (DSC).

Examples of the non-fibrillatable melt-fabricable component include components that sufficiently exhibit meltability and flowability at a drawing temperature during production of the porous membrane, such as heat-meltable fluoropolymer, polystyrene resin, polyethylene terephthalate (PET) resin, polyester resin, polyamide resin, and mixtures of the foregoing resins. In particular, a heat-meltable fluoropolymer is preferred from the viewpoint of high heat resistance at a drawing temperature during production of the porous membrane and high chemical resistance. The heat-meltable fluoropolymer is a fluoropolymer having a copolymer unit derived from at least one fluorinated ethylenically unsaturated monomer, preferably two or more fluorinated ethylenically unsaturated monomers, represented by general formula (2) below.

RCF=CR₂ ··· (2)

(In the formula, each R is independently selected from H, F, Cl, alkyl having 1 to 8 carbon atoms, aryl having 6 to 8 carbon atoms, cyclic alkyl having 3 to 10 carbon atoms, and perfluoroalkyl having 1 to 8 carbon atoms. In this case, all R may be the same, any two R may be the same and the remaining one R may be different from the two R, or all R may be different from each other.)

Non-limiting useful examples of the compound represented by the general formula (2) include perfluoroolefins such as fluoroethylene, VDF, trifluoroethylene, TFE, and HFP; chlorofluoroolefins such as CTFE and dichlorodifluoroethylene; (perfluoroalkyl)ethylenes such as PFBE and PFHE; perfluoro-1,3-dioxole; and mixtures of the foregoing.

The fluoropolymer may also include a copolymer derived from copolymerization of at least one monomer represented by the general formula (2) and at least one copolymerizable comonomer represented by the above general formula (1) and/or general formula (3) below.

R₂C=CR₂ ··· (3)

(In the formula, each R is independently selected from H, Cl, an alkyl group having 1 to 8 carbon atoms, an aryl group having 6 to 8 carbon atoms, and a cyclic alkyl group having 3 to 10 carbon atoms. In this case, all R may be the same, any two or more R may be the same and the remaining R may be different from the two or more R, or all R may be different from each other. If the remaining R are plural R, the plural R may be different from each other.)

A useful example of the compound represented by the general formula (1) is a perfluoro(alkyl vinyl ether) (PAVE). The PAVE is preferably perfluoro(propyl vinyl ether) (PPVE) or perfluoro(methyl vinyl ether) (PMVE).

Useful examples of the compound represented by the general formula (3) include ethylene and propylene.

More specific examples of the fluoropolymer include polyfluoroethylene derived from polymerization of fluoroethylene, polyvinylidene fluoride (PVDF) derived from polymerization of vinylidene fluoride (VDF), polychlorotrifluoroethylene (PCTFE) derived from polymerization of chlorotrifluoroethylene (CTFE), a fluoropolymer derived from copolymerization of two or more different monomers represented by the general formula (2), and a fluoropolymer derived from copolymerization of at least one monomer represented by the general formula (2) and at least one monomer represented by the general formula (1) and/or at least one monomer represented by the general formula (3).

Examples of the fluoropolymer include polymers having a copolymer unit derived from VDF and hexafluoropropylene (HFP) and polymers derived from TFE and at least one copolymerizable comonomer (at least three wt%) other than TFE. Examples of the latter fluoropolymer include TFE/PAVE copolymers (PFA), TFE/PAVE/CTFE copolymers, TFE/HFP copolymers (FEP), TFE/ethylene copolymers (ETFE), TFE/HFP/ethylene copolymers (EFEP), TFE/VDF copolymers, TFE/VDF/HFP copolymers, TFE/VDF/CTFE copolymers, and mixtures of the foregoing copolymers.

The non-fibrillatable melt-fabricable component may contain the above-described components in a combined manner.

The content of the non-fibrillatable melt-fabricable component in the porous membrane is preferably 0.1 wt% or more and less than 20 wt%. When the content is less than 20 wt%, the non-fibrillatable melt-fabricable component is dispersed in portions other than the nodal portions in the porous membrane, which suppresses an increase in the pressure loss of the porous membrane. Furthermore, when the content is less than 20 wt%, drawing is easily performed at a high area drawing ratio of 40 times or more. When the content of the non-fibrillatable melt-fabricable component in the porous membrane is 0.1 wt% or more, the deterioration of filter performance of the porous membrane is sufficiently suppressed even if a compressive force or the like is exerted in the downstream processes. The content of the non-fibrillatable melt-fabricable component in the porous membrane is preferably 15 wt% or less and more preferably 10 wt% or less. The content of the non-fibrillatable melt-fabricable component in the porous membrane is preferably 0.5 wt% or more from the viewpoint of ensuring the strength of the porous membrane. The content is particularly preferably about 5 wt%.

The content of the non-fibrillatable melt-fabricable component is preferably 10 wt% or less to satisfactorily perform drawing at an area drawing ratio of 40 times or more and 800 times or less.

### (2-4) Method for producing fluororesin porous membrane

Next, a method for producing an air filter medium will be described by taking examples.

In the production of the fluororesin porous membrane, a fluororesin can be used. For example, the fluororesin is preferably formed of the above-described A component or the above-described three components.

The form of the three components A to C described above is not limited, and is, for example, a composition, a mixed powder, or a molding material described later. The composition, the mixed powder, and the molding material each contain the above-described A component, B component, and C component and each contain the C component, for example, in an amount of 0.1 wt% or more and less than 20 wt% relative to the total amount.

The form of the raw material for the porous membrane may be a mixed powder described later or a non-powdery mixture or may be a molding material or a composition described later. The mixed powder is, for example, a fine powder obtained through co-coagulation, a powder obtained by mixing two raw materials out of three through co-coagulation and mixing the remaining component using a mixer, or a powder obtained by mixing three raw materials using a mixer, which are used in Examples below. The non-powdery mixture is, for example, a molded body such as a porous body (e.g., a porous membrane) or an aqueous dispersion body containing the three components.

The molding material is a material adjusted for processing required to mold a composition, such as a material to which a processing aid (e.g., liquid lubricant) or the like is added, a material whose grain size is adjusted, or a preliminarily molded material. The molding material may contain, for example, a publicly known additive in addition to the above three components. Examples of the publicly known additive include carbon materials such as carbon nanotube and carbon black, pigments, photocatalysts, activated carbon, antibacterial agents, adsorbents, and deodorizers.

The composition can be produced by various methods. For example, when the composition is a mixed powder, the composition can be produced by a method in which a powder of the A component, a powder of the B component, and a powder of the C component are mixed with each other using a typical mixer or the like, a method in which an aqueous dispersion containing the A component, an aqueous dispersion containing the B component, and an aqueous dispersion containing the C component are co-coagulated to obtain a co-coagulated powder, or a method in which a mixed powder obtained by, in advance, co-coagulating an aqueous dispersion containing any two components of the A component, the B component, and the C component is mixed with a powder of the remaining component using a typical mixer or the like. In particular, the composition is preferably a composition obtained by co-coagulating an aqueous dispersion containing the A component, an aqueous dispersion containing the B component, and an aqueous dispersion containing the C component from the viewpoint of ease of uniform dispersion of the three different components.

The size of the mixed powder obtained by co-coagulation is not limited, and, for example, the average particle size is 100 µm or more and 1000 µm or less and preferably 300 µm or more and 800 µm or less. In this case, the average particle size is measured in conformity to JIS K6891. The apparent density of the mixed powder obtained by co-coagulation is not limited, and is, for example, 0.40 g/ml or more and 0.60 g/ml or less and preferably 0.45 g/ml or more and 0.55 g/ml or less. The apparent density is measured in conformity to JIS K6892.

The co-coagulation method is, for example, as follows:
(i) a method in which an aqueous dispersion of the A component, an aqueous dispersion of the B component, and an aqueous dispersion of the C component are mixed with each other and then coagulation is performed;
(ii) a method in which an aqueous dispersion containing any one of the A component, the B component, and the C component is mixed with powders of the remaining two components and then coagulation is performed;
(iii) a method in which a powder of any one of the A component, the B component, and the C component is added to a mixed aqueous dispersion containing aqueous dispersions of the remaining two components in a mixed manner and then coagulation is performed; and
(iv) a method in which a two-component mixed powder obtained by mixing in advance aqueous dispersions of any two of the A component, the B component, and the C component and then performing coagulation is added to an aqueous dispersion of the remaining one component and then coagulation is performed.

The method (i) is preferred as a co-coagulation method because the three components are easily dispersed in a uniform manner.

In the co-coagulation performed by the methods (i) to (iv), coagulation is preferably performed by adding any of an acid such as nitric acid, hydrochloric acid, or sulfuric acid; a metal salt such as magnesium chloride, calcium chloride, sodium chloride, aluminum sulfate, magnesium sulfate, barium sulfate, sodium hydrogencarbonate, or sodium carbonate; or an organic solvent such as acetone or methanol.

The form of the A component before mixing is not limited, and may be an aqueous dispersion or a powder of the above-described fibrillatable PTFE. Examples of the powder (in particular, the above-described FP: fine powder) include "Teflon 6-J" (Teflon: registered trademark), "Teflon 6C-J", and "Teflon 62-J" manufactured by Du Pont-Mitsui Fluorochemicals Company, Ltd.; "POLYFLON F106", "POLYFLON F104", "POLYFLON F201", and "POLYFLON F302" manufactured by DAIKIN INDUSTRIES, Ltd.; "Fluon CD123", "Fluon CD1", "Fluon CD141", and "Fluon CD145" manufactured by AGC Inc.; and "Teflon 60", "Teflon 60 X", "Teflon 601A", "Teflon 601 X", "Teflon 613A", "Teflon 613AX", "Teflon 605XT X", and "Teflon 669 X" manufactured by Du Pont. Alternatively, the fine powder may be obtained by coagulating and drying an aqueous dispersion (an as-polymerized aqueous dispersion) of a fibrillatable PTFE obtained through emulsion polymerization of TFE.

The aqueous dispersion of a fibrillatable PTFE may be the as-polymerized aqueous dispersion or a commercially available aqueous dispersion. A preferred method for producing the as-polymerized aqueous dispersion of a fibrillatable PTFE is a production method disclosed in the above patent documents listed for disclosing homo-PTFEs. Examples of the commercially available aqueous dispersion of a fibrillatable PTFE include aqueous dispersions such as "POLYFLON D-110", "POLYFLON D-210", "POLYFLON D-210C", and "POLYFLON D-310" manufactured by DAIKIN INDUSTRIES, Ltd.; "Teflon 31-JR" and "Teflon 34-JR" manufactured by Du Pont-Mitsui Fluorochemicals Company, Ltd.; and "Fluon AD911L", "Fluon AD912L", and "AD938L" manufactured by AGC Inc. Since any commercially available aqueous dispersion of a fibrillatable PTFE contains 2 to 10 parts by weight of a nonionic surfactant or the like relative to 100 parts by weight of PTFE in the aqueous dispersion in order to maintain stability, the nonionic surfactant tends to remain in a mixed powder obtained by co-coagulation, which may cause a problem such as coloring of a porous body. Thus, the aqueous dispersion of a fibrillatable PTFE is preferably an as-polymerized aqueous dispersion.

The form of the B component before mixing is not limited. When the B component is a low-molecular-weight PTFE, the form of the B component before mixing is not limited, but may be an aqueous dispersion body or a powder (generally referred to as a PTFE micropowder or a micropowder). Examples of the powder of the low-molecular-weight PTFE include "MP1300-J" manufactured by Du Pont-Mitsui Fluorochemicals Company, Ltd.; "Lubron L-5" and "Lubron L-5F" manufactured by DAIKIN INDUSTRIES, Ltd.; "Fluon L169J", "Fluon L170J", and "Fluon L172J" manufactured by AGC Inc.; and "KTL-F" and "KTL-500F" manufactured by KITAMURA Limited.

The aqueous dispersion of the low-molecular-weight PTFE may be the as-polymerized aqueous dispersion obtained through emulsion polymerization of TFE or a commercially available aqueous dispersion. Alternatively, an aqueous dispersion prepared by dispersing a micropowder in water using a surfactant or the like may be used. Examples of the preferred method for producing the as-polymerized aqueous dispersion of the fibrillatable PTFE include production methods disclosed in Japanese Unexamined Patent Application Publication No. 7-165828, Japanese Unexamined Patent Application Publication No. 10-147617, Japanese Unexamined Patent Application Publication No. 2006-063140, Japanese Unexamined Patent Application Publication No. 2009-1745, and International Publication No. 2009/020187. An example of the commercially available aqueous dispersion of the fibrillatable PTFE is an aqueous dispersion such as "Lubron LDW-410" manufactured by DAIKIN INDUSTRIES, Ltd. Since commercially available aqueous dispersions of a low-molecular-weight PTFE contain 2 to 10 parts by weight of a nonionic surfactant or the like relative to 100 parts by weight of PTFE in the aqueous dispersion in order to maintain stability, the nonionic surfactant tends to remain in a mixed powder obtained by co-coagulation, which may cause a problem such as coloring of a porous body. Thus, the aqueous dispersion of the low-molecular-weight PTFE is preferably an as-polymerized aqueous dispersion liquid.

When an inorganic filler is used as the B component, the form of the B component before mixing is also not limited, and is preferably an aqueous dispersion body. Examples of the inorganic filler include "Talc P2" manufactured by NIPPON TALC Co., Ltd. and "LMR-100" manufactured by FUJI TALC INDUSTRIAL Co., Ltd. They are used by dispersing a powder in water through, for example, appropriate surface treatment using a silane coupling agent or the like. In particular, a secondary crushed product (e.g., "Talc P2") obtained by using a jet mill is preferably used in terms of dispersibility in water.

Examples of the C component include fluororesins such as FEP and PFA and resins such as acrylic resin, urethane resin, and PET resin. The form of the C component before mixing is not limited, and is preferably an aqueous dispersion body. When a resin obtained through emulsion polymerization is used, the aqueous dispersion body may be an as-polymerized dispersion body or a dispersion body obtained by dispersing a resin powder in water using a surfactant or the like. The aqueous dispersion body is prepared by dispersing the C component in water in a predetermined amount so that the porous membrane contains 0.1 wt% or more and less than 20 wt% of the C component.

The method of co-coagulation is not limited, and it is preferable to mix three aqueous dispersion bodies and then exert a mechanical stirring force.

After the co-coagulation, dehydration and drying are performed and extrusion is performed using a liquid lubricant (extrusion aid) added. Any liquid lubricant may be used as long as the liquid lubricant can wet the surface of the PTFE powder and is a substance that can be removed after the mixture obtained through co-coagulation is molded into a film. Examples of the liquid lubricant include hydrocarbon oils such as liquid paraffin, naphtha, white oil, toluene, and xylene, alcohols, ketones, and esters.

The mixture obtained through co-coagulation is mixed with a liquid lubricant and then extruded and rolled by a publicly known method to obtain a molded film-like product. The amount of the liquid lubricant mixed with the fluororesin (for example, a mixture obtained by co-coagulation) is set to 10 parts by weight or more and 40 parts by weight or less with respect to 100 parts by weight of the fluororesin, and is preferably 25 parts by weight or more and 35 parts by weight or less. By increasing the amount of the liquid lubricant, a large thickness of a fluororesin porous membrane to be obtained is ensured while the filling factor is decreased, which easily suppresses the pressure loss to be small. By decreasing the amount of the liquid lubricant, the collection efficiency of a fluororesin porous membrane to be obtained is easily increased, which easily suppresses the coefficient of variation of the pressure loss to be small.

The extrusion is performed by, for example, paste extrusion or ram extrusion and preferably by paste extrusion. A sheet-shaped extruded product obtained through paste extrusion is rolled using a calender roll or the like under heating at a temperature of, for example, 40°C or higher and 80°C or lower. The thickness of the obtained film-like rolled product is set in accordance with the thickness of the intended porous membrane and is 100 µm or more and 400 µm or less, and is preferably 150 µm or more and 350 µm or less.

Subsequently, the liquid lubricant is removed from the unfired film that is the rolled product. The liquid lubricant is removed by a heating method and/or an extracting method. When the three components A to C are used, the heating temperature in the heating method is not limited as long as the heating temperature is lower than the melting point of the non-fibrillatable melt-fabricable component. The heating temperature is, for example, 100°C or higher and 250°C or lower and may be 180°C or higher and 200°C or lower.

Herein, the rolled product from which the liquid lubricant has been removed is preferably subjected to heat treatment in an atmosphere at a temperature of 250°C or higher and 325°C or lower for 1 minute or longer before drawing from the viewpoint of sufficiently ensuring the thickness of the obtained fluororesin porous membrane and decreasing the pressure loss. The temperature of the heat treatment may be, for example, 320°C or lower and is preferably lower than the melting point of the fluororesin used for producing the fluororesin porous membrane. In the case where a plurality of endothermic curves (primary melting point, secondary melting point) appears on a crystal melting curve when the rolled product is heated using a differential scanning calorimeter at a temperature-increasing rate of 10 °C/min, the temperature of the heat treatment may be lower than or equal to the lower maximum peak temperature (primary melting point). The temperature of the heat treatment may be, for example, 260°C or higher or 280°C or higher, may be a temperature higher than or equal to the temperature at which the liquid lubricant is removed from the unfired film that is the rolled product by the heating method, or may be a temperature higher than or equal to the drawing temperature (in the case of biaxial drawing, the temperature of primary drawing performed earlier) from the viewpoint of sufficiently ensuring the thickness and sufficiently decreasing the pressure loss. The duration of the heat treatment is not limited, and may be, for example, 1 minute or longer and 2 hours or shorter or 30 minutes or longer and 1 hour or shorter in accordance with desired effects of the heat treatment.

To obtain fluororesin porous membranes having different filling factors in the thickness direction, the temperature is not limited, but the heat treatment is preferably performed such that the temperature on the side on which the filling factor is decreased is higher than that on the side on which the filling factor is increased. The heat treatment is preferably performed such that the temperature of the heat treatment in a portion on the windward side is higher than that in a portion on the leeward side. The portion on the leeward side may be cooled to a temperature lower than the normal temperature. Regarding the temperature of the heat treatment, the difference in temperature between the portion on the windward side and the portion on the leeward side may be 100°C or higher and is preferably 200°C or higher and more preferably 300°C or higher from the viewpoint of generating a sufficient density difference. During the heat treatment, the heat treatment is preferably performed such that the heating time in the portion in which the filling factor is decreased is increased and the heating time in the portion in which the filling factor is increased is decreased. Accordingly, by drawing the obtained rolled product, the filling factor on the windward side can be decreased and the filling factor on the leeward side can be increased.

Thus, the rolled product from which the liquid lubricant has been removed or the rolled product further subjected to heat treatment is drawn. When the non-fibrillatable melt-fabricable component and the non-fibrillatable non-melt-fabricable component are contained, the drawing is performed at a temperature that is higher than or equal to the melting point of the non-fibrillatable melt-fabricable component and that is lower than or equal to the decomposition temperature of the non-fibrillatable non-melt-fabricable component.

When a non-fibrillatable melt-fabricable component is used in the production of the fluororesin porous membrane, the non-fibrillatable melt-fabricable component melts in the drawing process and subsequently solidifies at the nodal portions, which can increase the strength of the porous membrane in the thickness direction. The drawing temperature at this time may be set in accordance with the temperature of a furnace in which the drawing is performed, the temperature of a heating roller that conveys the rolled product, or a combination of these temperatures.

The drawing is performed in a first direction and preferably in a second direction orthogonal to the first direction. Herein, the drawing in the second direction may be performed after the drawing in the first direction. The drawing in the first direction and the drawing in the second direction may be simultaneously performed. After the drawing in the first direction at a first drawing speed, the drawing in the first direction is further performed at a second drawing speed, and then the drawing in the second direction may be performed. In the present embodiment, the first direction is a longitudinal direction (machine direction: MD) of the rolled product, and the second direction is a width direction (transverse direction: TD) of the rolled product. The drawing may be performed simultaneously while a plurality of rolled products is stacked.

The area drawing ratio of the rolled product is 250 times or more and 800 times or less, is preferably 300 times or more and 600 times or less, and is more preferably 400 times or more and 580 times or less. Preferably, the drawing ratio is sufficiently increased because the fluororesin porous membrane can have a larger number of fibers and the collection efficiency can be easily improved, which can improves the uniformity of drawing to reduce the coefficient of variation of pressure loss. Preferably, the drawing ratio is sufficiently decreased because an excessive decrease in the thickness of the fluororesin porous membrane is suppressed, which can suppress an excessive decrease in the dust-holding capacity.

From the viewpoint of increasing the thickness of the obtained fluororesin porous membrane to improve the dust-holding capacity and suppressing the coefficient of variation of pressure loss while decreasing the pressure loss, the drawing is performed so as to provide a portion drawn at a drawing speed of 30 %/s or less in a drawing direction and more preferably performed so as to provide a portion drawn at a drawing speed of 20 %/s or less. In the case of biaxial drawing, it is sufficient that a drawing speed of 30 %/s or less is achieved in any of the machine direction and the transverse direction. It is preferable to achieve a drawing speed of 30 %/s or less during the preceding drawing in the machine direction from the viewpoint of decreasing the pressure loss while sufficiently ensuring the thickness. When the drawing in the machine direction is performed in two stages at different drawing speeds, it is preferable that the drawing is performed at a drawing speed of 30 %/s or less in the drawing direction in any of the two stages. Furthermore, in the case where drawing is simultaneously performed in the machine direction and the transverse direction in a plane using a table test apparatus or the like, it is preferable to achieve a drawing speed of 30 %/s or less in any of the machine direction and the transverse direction. The drawing speed can be set to, for example, 1 %/s or more in the drawing direction regardless of the machine direction and the transverse direction.

The drawing speed is a value obtained by dividing a drawing ratio (%) by the time (second) required for the drawing. The drawing ratio (%) is a ratio of the length after drawing to the length before drawing (length after drawing/length before drawing). The drawing speed is preferably decreased as described above because the pressure loss of the porous membrane to be obtained can be further decreased.

From the viewpoint of increasing the thickness of the obtained fluororesin porous membrane and further decreasing the pressure loss, it is preferable to perform the heat treatment on the rolled product before the drawing and furthermore perform drawing at a low speed as described above.

In the case of biaxial drawing, the temperature during the drawing in the first direction is preferably 200°C or higher and 300°C or lower and more preferably 230°C or higher and 270°C or lower. The temperature during the drawing in the second direction is preferably 200°C or higher and 300°C or lower and more preferably 250°C or higher and 290°C or lower.

When the rolled product (also referred to as an unfired fluororesin product) is drawn, the temperature, the drawing ratio, and the drawing speed during the drawing are known to affect the physical properties of a drawn product. The S-S curve (a graph illustrating the relationship between tensile force and elongation) of the unfired fluororesin product shows unique characteristics different from those of other resins. Normally, the tensile force of resin materials increases as the elongation increases. In most cases, for example, the elastic region and the breaking point are dependent on the material and the evaluation conditions whereas the tensile force tends to increase as the elongation increases. In contrast, the unfired fluororesin product has a tensile force that shows a peak at a particular elongation and then tends to gradually decrease. This shows that unfired fluororesin products have a "region in which portions not subjected to drawing are stronger than portions subjected to drawing".

When this is applied to the behavior during drawing, in the case of a general resin, the weakest portion in the drawing plane starts to draw during drawing, but the drawn portion becomes stronger than the undrawn portion. Therefore, the next weaker undrawn portion is drawn, whereby the drawn region expands and the entire film is drawn. On the other hand, in the case of the unfired fluororesin product, when the portion that starts to draw reaches the "region in which portions not subjected to drawing are stronger than portions subjected to drawing", the portion that has already been drawn is further drawn. As a result, the undrawn portion remains as a node (nodal portion, undrawn portion). As the drawing speed decreases, this phenomenon becomes noticeable and larger nodes (nodal portions or undrawn portions) are left. By using this phenomenon during drawing, the physical properties of a drawn body are adjusted in accordance with various applications.

For the fluororesin porous membrane according to the present embodiment, a drawn body having a lower density is preferably obtained, and it is effective to apply a low drawing speed particularly to first drawing in the case of biaxial drawing. Herein, when large nodes (nodal portions or undrawn portions) are left and a non-fibrillatable non-melt-fabricable component is used, the above-described phenomenon due to a low drawing speed becomes more noticeable compared with the case where only known PTFE is used as a raw material. Even when a molded body having a large thickness is intended to be obtained, the drawing speed can be increased compared with the case where only PTFE is used as a raw material.

The thus-obtained porous membrane is preferably subjected to heat setting to achieve mechanical strength and dimensional stability. The temperature during the heat setting may be a temperature higher than or equal to the melting point of PTFE or lower than the melting point of PTFE and is preferably 250°C or higher and 400°C or lower.

The fluororesin porous membrane may have a single-layer structure or may have a multilayer structure in which a first fluororesin porous membrane and a second fluororesin porous membrane are stacked. The content of the liquid lubricant used in the production is preferably 25 parts by weight or more and 35 parts by weight or less relative to 100 parts by weight of the fluororesin. When the content is 25 parts by weight or more, the pressure loss can be decreased, which easily decreases the pressure loss of the whole filter medium to 80 Pa or less. When the content is 35 parts by weight or less, the moldability of an unfired film (raw tape) can be ensured. This can suppress an excessively high load on the second fluororesin porous membrane on the downstream side caused when fine particles pass through the first fluororesin porous membrane having an excessively increased pore size toward the downstream side without being collected.

In particular, the content of the liquid lubricant used in the production of the first fluororesin porous membrane is, for example, preferably 30 parts by weight or more and 35 parts by weight or less relative to 100 parts by weight of the fluororesin. For example, the dust-holding capacity of the filter medium can be greatly increased by using 30 parts by weight or more and 35 parts by weight or less of the liquid lubricant for producing the first fluororesin porous membrane and 26 parts by weight or more and 31 parts by weight or less of the liquid lubricant for producing the second fluororesin porous membrane while a liquid lubricant content difference of 1 to 4 parts by weight is satisfied.

The differentiation in mean flow pore size between the first fluororesin porous membrane and the second fluororesin porous membrane may be achieved by differentiating the mixing ratio of the three components between the two porous membranes.

### (3) Air-permeable supporting member

The air-permeable supporting member is disposed on the upstream side or the downstream side with respect to the fluororesin porous membrane or on both the upstream side and the downstream side so as to support the fluororesin porous membrane. Therefore, even if it is difficult to independently use the fluororesin porous membrane, for example, because of its small thickness, the support of the air-permeable supporting member allows the use of the fluororesin porous membrane. Furthermore, the strength as an air filter medium is ensured. Even when the air filter medium is folded into a specific shape, the shape is easily maintained.

Non-limiting examples of the material and structure of the air-permeable supporting member include nonwoven fabric, woven fabric, metal mesh, and resin net. In particular, a nonwoven fabric having heat fusibility is preferred from the viewpoint of strength, collectability, flexibility, and workability. The nonwoven fabric is preferably a nonwoven fabric in which some or all of constituent fibers have a core/sheath structure, a two-layer nonwoven fabric including a fiber layer formed of a low-melting-point material and a fiber layer formed of a high-melting-point material, or a nonwoven fabric whose surface is coated with a heat fusible resin. Such a nonwoven fabric is, for example, a spun-bonded nonwoven fabric. The nonwoven fabric having a core/sheath structure is preferably a nonwoven fabric in which the core component has a higher melting point than the sheath component. Examples of the combination of materials for the core/sheath include PET/PE and high-melting-point polyester/low-melting-point polyester. Examples of the combination of the low-melting-point material/high-melting-point material for the two-layer nonwoven fabric include PE/PET, PP/PET, PBT/PET, and low-melting-point PET/high-melting-point PET. Examples of the nonwoven fabric whose surface is coated with a heat fusible resin include a PET nonwoven fabric whose surface is coated with EVA (ethylene-vinyl acetate copolymer resin) and a PET nonwoven fabric whose surface is coated with an olefin resin.

Non-limiting examples of the material for the nonwoven fabric include polyolefins (e.g., PE and PP), polyamides, polyesters (e.g., PET), aromatic polyamides, and composite materials of the foregoing.

The air-permeable supporting member can be joined to the fluororesin porous membrane by using an anchor effect due to partial melting of the air-permeable supporting member through heating or due to melting of a hot-melt resin, or by using adhesion of a reactive adhesive or the like.

The air-permeable supporting member has a pressure loss, a collection efficiency, and a dust-holding capacity much lower than those of the above-described fluororesin porous membrane. The pressure loss, the collection efficiency, and the dust-holding capacity may be values considered to be substantially zero. The pressure loss of the air-permeable supporting member is, for example, preferably 10 Pa or less, more preferably 5 Pa or less, and further preferably 1 Pa or less. The collection efficiency of the air-permeable supporting member may be, for example, a value considered to be substantially zero or about zero.

The thickness of the air-permeable supporting member is, for example, preferably 500 µm or less and more preferably 300 µm or less. When the fluororesin porous membrane is folded and used in a pleated shape, the thickness of the air-permeable supporting member is preferably 200 µm or more from the viewpoint of easily maintaining the pleated shape.

### (4) Use of air filter media

Since the air filter medium according to the present embodiment has a low pressure loss, the air filter medium is preferably used for masks from the viewpoint of being able to reduce breathing difficulty during use.

The mask is preferably a mask that suppresses entry of dust, oil smoke, bacteria, viruses, and the like into the human body through the mouth and nose.

The type of the mask may be a general-purpose mask, a dust-proof mask, or a medical mask. The form of the mask may be any of a flat type, a pleated type, and a three-dimensional type. The pleated mask may be used in a state in which a folded pleat portion is stretched out. The three-dimensional mask may have a beak shape that is tapered toward the front side.

### (5) Pleated mask filter medium

The pleated mask filter medium according to the present embodiment is obtained by processing (pleating) the above-described air filter medium into a zigzag shape in which mountain folds and valley folds are alternately repeated so that the filter medium surfaces face each other to form a pleated portion, whereby the entire filter medium has a substantially rectangular parallelepiped shape in which the mountain fold portions constitute a windward surface and the valley fold portions constitute a leeward surface. Alternatively, the pleated mask filter medium may have a concentric pleated shape in which a plurality of mountain fold portions is provided on the windward side in a concentric manner and a plurality of valley fold portions is provided on the leeward side in a concentric manner.

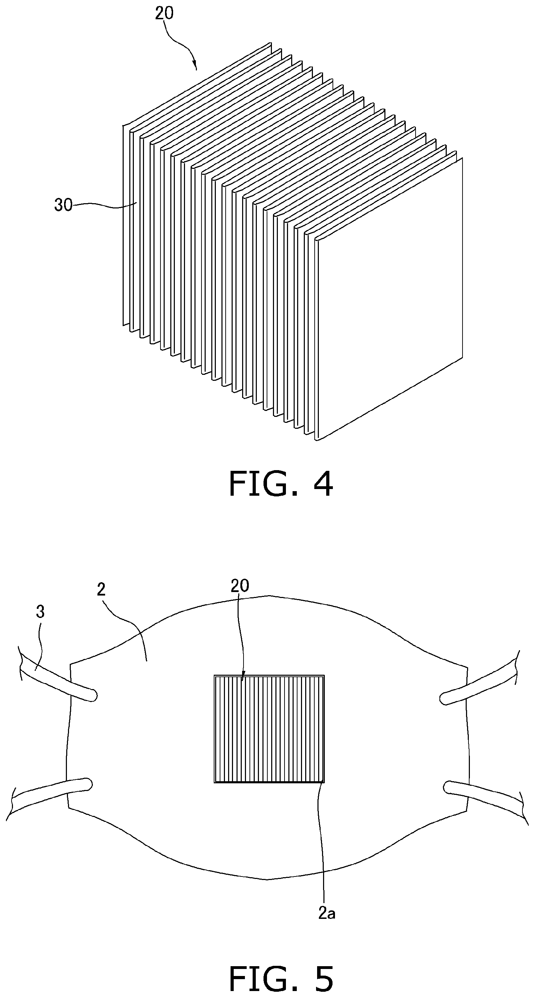

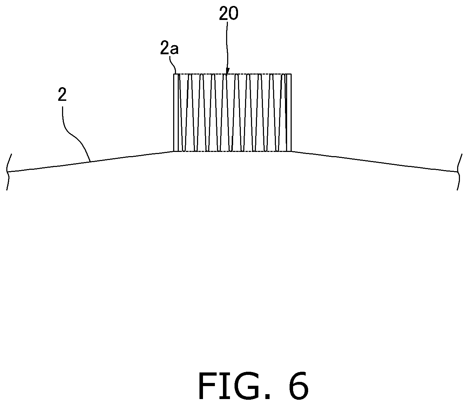

For the pleated mask filter medium according to the present embodiment, FIG. 4 is an external perspective view, FIG. 5 is a front view of the pleated mask filter medium in a state of being attached to a base, and FIG. 6 is a side sectional view of the pleated mask filter medium in a state of being attached to a base.

As illustrated in FIGs. 4 to 6, the pleated mask filter medium may be a pleated mask filter medium 20 used by being attached to an opening 2a of a base 2 made of a resin or the like having no filtration function. The pleated mask filter medium 20 is more preferably used by being attached to a base 2 having a filter medium replaceable attachment opening 2a. The base 2 may be provided with straps 3 for hooking over the ears.

The fold height, which is a distance between a mountain fold portion and a valley fold portion adjacent to each other of the pleated mask filter medium, is 10 mm or more and 40 mm or less. By setting the fold height to be 10 mm or more, it is possible to facilitate a folding process when forming mountain fold portions and valley fold portions of the air filter medium. By setting the fold height to be 40 mm or less, it is possible to suppress an increase in pressure loss due to the pleated structure of the pleated mask filter medium.

The pleat interval, which is a distance between adjacent mountain fold portions or adjacent valley fold portions of the pleated mask filter medium, is preferably 2.0 mm or more and 4.5 mm or less. When the pleat interval is 2.0 mm or more, an increase in pressure loss due to the pleated structure can be suppressed. When the pleat interval is 4.5 mm or less, the total area of the air filter medium that can be used for pleated mask filter media can be sufficiently increased.

The interval between filter medium surfaces facing each other in the pleated mask filter medium may be ensured, for example, by using a separator such as a hot-melt resin serving as an interval holding member, or by using protrusions formed by embossing the filter medium surfaces. The pleated mask filter medium may be a simply folded medium without using a separator or performing embossing. Even in this case, the airflow can pass between the mountain fold portions on the windward side.

The area of the windward surface of the pleated mask filter medium attached to the opening formed in the base can be set to, for example, 22 cm² or more and 61 cm² or less. In the case where the windward surface is rectangular, for example, the diagonal line may have a length of 4.5 cm or more and 11 cm or less.

The total area of the pleated mask filter medium is preferably 200 cm² or more and more preferably 300 cm² or more from the viewpoint of easily maintaining a low pressure loss even after the collection target is held to some extent, and of also easily maintaining a good collection efficiency. The total area of the pleated mask filter medium is preferably 1300 cm² or less from the viewpoint that the area and fold height of the windward surface of the pleated mask filter medium are reasonable for use and an effective pleat interval is realized.

When air containing polyalphaolefin particles having a number median diameter of 0.25 µm is continuously passed through the pleated mask filter medium at a flow rate of 85 L/min to apply a load of 200 mg of the polyalphaolefin particles, the pressure loss given when the air is passed through the filter medium at a flow rate of 40 L/min is preferably 120 Pa or less, more preferably 100 Pa or less, and further preferably 80 Pa or less. As a result, even after continuous use, it is possible to make the user hardly feel breathing difficulty during use.

### EXAMPLES

Hereafter, the present disclosure will be specifically described based on Examples and Comparative Examples.

### (Examples 1 to 6 and Comparative Examples 1 to 6)

The FP raw material for the fluororesin porous membrane used for the air filter medium in Example 1 was a mixed powder constituted by three components (fibrillatable PTFE (A component), non-fibrillatable non-melt-fabricable component (B component), and non-fibrillatable melt-fabricable component (C component) having a melting point of lower than 320°C).

More specifically, 66.5 wt% (in terms of polymer) of a PTFE aqueous dispersion body (A component) having an SSG of 2.160 and prepared by the method described in Comparative Example 3 in International Publication No. 2005/061567, 28.5 wt% (in terms of polymer) of a low-molecular-weight PTFE aqueous dispersion body (B component) having a melt viscosity of 20000 Pa·s as measured by a flow tester method at 380°C and prepared by the method described in International Publication No. 2009/020187, and 5 wt% (in terms of polymer) of an FEP aqueous dispersion body (C component) having a melting point of 215°C and prepared by the method described in Japanese Unexamined Patent Application Publication No. 2010-235667 were mixed with each other. As a coagulant, 500 ml of a 1% aqueous aluminum nitrate solution was added thereto, and stirring was performed to cause co-coagulation. The resulting powder was strained through a strainer to remove water and then further dried in a hot-air drying furnace at 135°C for 18 hours to obtain a mixed powder of the above three components.

Subsequently, 29.0 parts by weight (29.0 parts by weight relative to 100 parts by weight of the mixed powder) of a hydrocarbon oil ("IP Solvent 2028" manufactured by Idemitsu Kosan Co., Ltd.) serving as an extrusion liquid lubricant was added to and mixed with 100 parts by weight of the mixed powder at 20°C. Then, the resulting mixture was extruded using a paste extruder to obtain a round bar-shaped molded body. The round bar-shaped molded body was molded into a film using a calender roll heated to 70°C to obtain a PTFE film. The resulting film was passed through a hot-air drying furnace at 250°C to evaporate and remove the hydrocarbon oil, thereby obtaining a belt-shaped unfired PTFE film (raw tape) having an average thickness of 300 µm and an average width of 150 mm. Subsequently, the unfired PTFE film was drawn at a predetermined drawing speed (13.8 %/s) in the longitudinal direction (MD direction) at a predetermined drawing ratio (10 times) in a predetermined temperature environment (250°C). Subsequently, the drawn unfired film was drawn at a predetermined drawing speed (330 %/s) in the width direction (TD direction) at a predetermined drawing ratio (45 times) in a predetermined temperature environment (288°C) using a tenter capable of clipping the drawn unfired film, and was subjected to heat setting at 390°C. Thus, a fluororesin porous membrane was obtained.

The fluororesin porous membranes used for the air filter media in Examples 2 to 5 and Comparative Examples 3 to 5 were obtained by using the same FP raw material as in Example 1 and changing the amount of the extrusion aid (liquid lubricant), the thickness of raw tape, the MD temperature, the MD drawing ratio, the MD drawing speed, the TD temperature, the TD drawing ratio, and the total drawing ratio as shown in Table 1.

The FP raw material for the fluororesin porous membranes used for the air filter media in Example 6 and Comparative Example 6 was prepared by mixing a mixed powder containing a fine powder (manufactured by DAIKIN INDUSTRIES, Ltd., product name: F302) of a perfluoroalkyl vinyl ether-modified polytetrafluoroethylene which is a copolymer of tetrafluoroethylene and perfluoroalkyl vinyl ether and a fine powder (manufactured by DAIKIN INDUSTRIES, Ltd. trade name: F106) of polytetrafluoroethylene having an average molecular weight of 6,500,000 at a weight ratio of 75:25, with an extrusion aid (liquid lubricant) in a predetermined amount (26 parts by weight in Example 6 and 23 parts by weight in Comparative Example 6) relative to 100 parts by weight of the mixed powder.

Then, the resulting mixture was extruded using a paste extruder equipped with a sheet die to obtain a sheet-shaped molded body. The sheet-shaped molded body was molded into a film using a calender roll heated to 70°C to obtain a PTFE film. The resulting film was passed through a hot-air drying furnace at 250°C to evaporate and remove the hydrocarbon oil, thereby obtaining a belt-shaped unfired PTFE film (raw tape) having a predetermined average thickness (220 µm in Example 6 and 600 µm in Comparative Example 6) and an average width of 170 mm. Subsequently, the unfired PTFE film was longitudinally drawn at a predetermined drawing speed (19.7 %/s in Example 6 and 28.7 %/s in Comparative Example 6) in the longitudinal direction (MD direction) at a predetermined drawing ratio (7.5 times in Example 6 and 10 times in Comparative Example 6) in a predetermined temperature environment (250°C) using a heated three-roll drawing apparatus. Subsequently, the drawn film was horizontally drawn at a predetermined drawing speed (330 %/s) in the width direction (TD direction) at a predetermined drawing ratio (45 times in Example 6 and 20 times in Comparative Example 6) in a predetermined temperature environment (283°C in Example 6 and 300°C in Comparative Example 6) using a tenter continuous drawing apparatus capable of performing continuous clipping, and was subjected to heat setting at 390°C. Thus, a fluororesin porous membrane was obtained.

The FP raw material for the fluororesin porous membranes used for the air filter media in Comparative Examples 1 and 2 was prepared by mixing a predetermined amount (30 parts by weight) of an extrusion aid (liquid lubricant) with 100 parts by weight of a fine powder (manufactured by DAIKIN INDUSTRIES, Ltd., trade name: F106), homo-PTFE, of polytetrafluoroethylene having an average molecular weight of 6,500,000.

Then, the resulting mixture was extruded using a paste extruder equipped with a sheet die to obtain a sheet-shaped molded body. The sheet-shaped molded body was molded into a film using a calender roll heated to 70°C to obtain a PTFE film. The resulting film was passed through a hot-air drying furnace at 200°C to evaporate and remove the extrusion aid, thereby obtaining a belt-shaped unfired PTFE film (raw tape) having a predetermined average thickness (200 µm) and an average width of 170 mm. Subsequently, the unfired PTFE film was longitudinally drawn at a predetermined drawing speed (29.5 %/s in Comparative Example 1 and 553.9 %/s in Comparative Example 2) in the longitudinal direction (MD direction) at a predetermined drawing ratio (10 times in Comparative Example 1 and 48 times in Comparative Example 2) in a predetermined temperature environment (300°C in Comparative Example 1 and 250°C in Comparative Example 2) using a heated three-roll drawing apparatus. Subsequently, the drawn film was horizontally drawn at a predetermined drawing speed (330 %/s) in the width direction (TD direction) at a predetermined drawing ratio (30 times in Comparative Example 1 and 36 times in Comparative Example 2) in a predetermined temperature environment (290°C) using a tenter continuous drawing apparatus capable of performing continuous clipping, and was subjected to heat setting at 390°C. Thus, a fluororesin porous membrane was obtained.

Air-permeable supporting members were heat-fused on both the upstream side and the downstream side of the fluororesin porous membranes used for the air filter media in Examples 1 to 6 and Comparative Examples 1 to 6 obtained as described above to obtain the air filter media. The air-permeable supporting members were each a spun-bonded nonwoven fabric (average fiber diameter 24 µm, basis weight 40 g/m², thickness 0.2 mm) formed of fibers having a core/sheath structure in which PET was used for the core and PE was used for the sheath (the collection efficiency could be considered to be substantially zero or about zero).

The physical properties measured in Examples 1 to 6 and Comparative Examples 1 to 6 are as follows.

### (Pressure loss in air filter medium)

The measurement sample of the air filter medium was set to a filter holder having a diameter of 100 mm. The pressure on the inlet side was increased using a compressor, and the flow rate of air that passed through the air filter medium was adjusted to 5.3 cm/s using a velocimeter. The pressure loss at this time was measured using a differential pressure gauge.

### (Collection efficiency of NaCl particles having particle size of 0.1 µm in air filter medium)

NaCl particles generated with an atomizer in conformity to the NaCl aerosol generating method (pressurized atomizing method) in JIS B9928 Appendix 5 (specification) were classified using an electrostatic classifier (manufactured by TSI Incorporated) into particles having a particle size of 0.1 µm. The charge on the particles was neutralized using americium-241. Then, the flow rate at which the particles passed through the air filter medium was adjusted to 5.3 cm/s. The numbers of particles before and after passage through the filter medium serving as a measurement sample were determined using a particle counter (CNC manufactured by TSI Incorporated), and the collection efficiency was calculated from the following formula. $Permeability \left(%\right) = \left(CO/CI\right) \times 100$ $Collection efficiency \left(%\right) = 100 - permeability \left(%\right)$
CO = Number of 0.1 µm NaCl particles on the downstream side of the measurement sample
CI = Number of 0.1 µm NaCl particles on the upstream side of the measurement sample

### (PF of NaCl particles having particle size of 0.1 µm in air filter medium)

With NaCl particles having a particle size of 0.1 µm, PF was determined from the following formula using the pressure loss and collection efficiency (the collection efficiency of NaCl particles having a particle size of 0.1 µm) of the air filter medium. $PF = \left\{-log\left(\left(100-collection efficiency \left(%\right)\right)/100\right)\right\} / \left(pressure loss \left(Pa\right)/1000\right)$

### (Thickness of fluororesin porous membrane)

The thickness of one layer was determined by stacking five layers to be measured, measuring the total thickness of the five layers using a thickness meter (ID-C112CX, manufactured by Mitutoyo Corporation), and dividing the total thickness by 5.

### (Dust-holding capacity of polyalphaolefin particles in air filter medium: PHC)

The dust-holding capacity was evaluated by a pressure loss-increase test in which polyalphaolefin (PAO) particles (liquid particles) were passed through the filter medium. That is, the pressure loss given when air containing PAO particles was continuously passed through a sample filter medium having an effective filtration area of 50 cm² at a flow rate of 5.3 cm/s was measured over time using a differential pressure gauge to determine a dust-holding capacity (g/m²) that was a weight of PAO particles held in the filter medium per unit area of the filter medium when the pressure loss increased by 250 Pa. The PAO particles were PAO particles (number median diameter: 0.25 µm) generated with a Laskin nozzle, and the concentration of the PAO particles was set to about 1,000,000 to 6,000,000/cm³.

### (Coefficient of variation (CV) of pressure loss in air filter medium)

From a long air filter medium (650 mm in the width direction) wound in a roll shape, a portion having a length of about 5 m and including the tip was drawn out. The air filter medium was divided into 25 sections each having 200 mm in the longitudinal direction of the air filter medium and into four sections each having 130 mm in the width direction except both ends to obtain 100 sections in a lattice manner. A filter holder having a diameter of 100 mm was used to measure the pressure loss at the 100 sections. The measurement of the pressure loss was performed by continuously measuring the pressure loss at a plurality of lattice sections while moving the filter medium in the longitudinal direction using a measuring apparatus equipped with five or more filter holders in the width direction of the filter medium. Then, the standard deviation was determined from the pressure loss distribution composed of the measured pressure losses. The determined standard deviation was divided by the average of the measured pressure losses in all the sections to determine a coefficient of variation (CV) (%).

### (Dust-holding capacity of NaCl particles in air filter medium)

The dust-holding capacity was evaluated by a pressure loss-increase test in which NaCl particles (solid particles) were passed through the filter medium. That is, the pressure loss given when air containing NaCl particles was continuously passed through a sample filter medium having an effective filtration area of 50 cm² at a flow rate of 5.3 cm/s was measured over time using a differential pressure gauge to determine a dust-holding capacity (g/m²) that was a weight of NaCl particles held in the filter medium per unit area of the filter medium when the pressure loss increased by 250 Pa. The NaCl particles were NaCl particles (number median diameter: 0.1 µm) generated with an atomizer, and the concentration of the NaCl particles was set to about 5,000,000 to 7,000,000/cm³. The dust-holding capacity of NaCl particles in the air filter medium was measured only for the air filter medium in Example 1, and was 2.5 g/m².

The physical properties of the air filter media in Examples 1 to 6 and Comparative Examples 1 to 6 are shown in Table below.

**[Table 1]**

| | | | Exam ple 1 | Exam ple 2 | Exam ple 3 | Exam ple 4 | Exam ple 5 | Exam ple 6 | Comparat ive Example 1 | Comparat ive Example 2 | Comparat ive Example 3 | Comparat ive example 4 | Comparat ive Example 5 | Comparat ive example 6 |
|---|---|---|---|---|---|---|---|---|---|---|---|---|---|---|
| Fluorores in porous membran e | Amount of aid | (P) | 29 | 29 | 25 | 29 | 25 | 26 | 30 | 30 | 25 | 33 | 25 | 23 |
| | Raw tape thickness | (um) | 300 | 200 | 300 | 300 | 300 | 220 | 200 | 200 | 200 | 600 | 300 | 600 |
| | MD temperat ure | (°C) | 250 | 250 | 250 | 250 | 250 | 250 | 300 | 250 | 300 | 250 | 250 | 250 |
| | MD drawing ratio | (-) | 10 | 10 | 10 | 12.5 | 10 | 7.5 | 10 | 48 | 5 | 25 | 10 | 10 |
| | drawing speed | (%/sec) | 13.8 | 29.5 | 13.8 | 13.8 | 11.4 | 19.7 | 29.5 | 553.9 | 38.0 | 166.1 | 29.5 | 28.7 |
| | TD temperat ure | (°C) | 288 | 288 | 288 | 286 | 288 | 283 | 290 | 290 | 290 | 290 | 290 | 300 |
| | TD drawing ratio | (-) | 45 | 45 | 45 | 45 | 45 | 45 | 30 | 36 | 13.5 | 40 | 45 | 20 |
| | Total drawing ratio | (-) | 450 | 450 | 450 | 563 | 450 | 338 | 300 | 1728 | 68 | 1000 | 450 | 200 |
| Pressure loss | | (Pa) | 55.8 | 45.1 | 71.2 | 57.4 | 68.1 | 59.3 | 148 | 50 | 77 | 61 | 107 | 97 |
| Collectio efficiency | (0.1µm NaCl) | (%) | 97.662 | 95.036 | 98.343 | 97.779 | 98.971 | 96.167 | 99.981 | 95 | 93.871 | 99.207 | 99.906 | 99.679 |
| PF | (0.1µm NaCl) | (-) | 28.6 | 28.3 | 24.5 | 28.2 | 28.6 | 23.4 | 24.6 | 25.5 | 15.4 | 33.7 | 27.7 | 25.2 |
| Thicknes s | | (µm) | 24 | 13 | 22 | 12 | 36 | 45 | 6 | 0.2 | 38.6 | 7 | 37 | 227 |
| PAO dust-holding capacity (PHC) | | (g/m²/250Pa) | 17 | 15 | 18 | 16 | 20 | 24 | 5.2 | 2.7 | 24 | 10 | 19 | 68 |
| CV | | (-) | 4.9 | 5.8 | 5.6 | 4.5 | 5.2 | 5.9 | 4.8 | 5.2 | 9.5 | 4.2 | 4.5 | 11.3 |

As is clear from Table 1, in each of Examples 1 to 6, an air filter medium having good uniformity was obtained while keeping the pressure loss low, keeping the collection efficiency high, keeping the thickness within a predetermined range, and keeping the PAO dust-holding capacity high.

In Comparative Examples 1 and 2 in which homo-PTFE was used as a raw material, the generation of fine fibers was not suppressed, a large thickness could not be maintained, and the PAO dust-holding capacity was considerably decreased. Furthermore, the pressure loss was increased in Comparative Example 1. In Comparative Example 2 in which the pressure loss was intended to be decreased, the thickness and the PAO dust-holding capacity were further decreased.

In Comparative Example 3 in which the same raw materials as in Examples 1 to 5 were used and in Comparative Example 6 in which the same raw materials as in Example 6 were used, the total drawing ratio was as small as less than 250 times, and the uniformity of the drawn membrane was considerably deteriorated. In Comparative Example 4 in which the same raw materials as in Examples 1 to 5 were used, the total drawing ratio was as large as more than 800 times, and the drawing speed in the MD direction was high. Therefore, the thickness could not be maintained and the dust-holding capacity of PAO was low.

Although the degree of breathing difficulty in the case of being used as a mask varies depending on the shape and fold area of the mask, the pressure loss of the air filter medium was set to 80 Pa or less in view of the processing and the degree of breathing difficulty during use. Comparative Example 5 in which the pressure loss of the air filter medium exceeds 80 Pa is an example that does not satisfy the performance conditions of the air filter medium.

### (Examples 7 and 8 and Comparative Example 7)

In Examples 7 and 8, pleated mask filter media were obtained by performing mountain folding and valley folding on the air filter medium of Example 1. In Comparative Example 7, a pleated mask filter medium was obtained by performing mountain folding and valley folding on the air filter medium of Comparative Example 2. Each of the pleated filter media in Examples 7 and 8 and Comparative Example 7 was folded into a substantially rectangular parallelepiped shape. In each of Examples 7 and 8 and Comparative Example 7, production was performed so that the total area, the fold height, the number of pleats, and the opening area were set as shown in Table 2.

Herein, the total area means an area of the air filter medium used for folding into a pleated shape.

The fold height means a distance between a mountain fold portion and a valley fold portion adjacent to each other.

The number of pleats means the number of mountain fold portions arranged on the windward side of the air flow in the pleated mask filter medium having a substantially rectangular parallelepiped shape.

The opening area means an area of a rectangular portion at the windward end of the air flow in the pleated mask filter medium having a substantially rectangular parallelepiped shape.

The pleated mask filter media in Examples 7 and 8 and Comparative Example 7 are replaceable pleated filter media used by being attached to a mask base having a predetermined filter medium attachment portion. The collection efficiency and the pressure loss were measured for the above-described pleated mask filter medium having a substantially rectangular parallelepiped shape.

### (Example 9)

The mask filter medium in Example 9 is a three-dimensional mask filter medium having a substantially beak shape and obtained by using the air filter medium in Example 1. The mask filter medium in Example 9 has a shape of a typical dust-proof mask that is formed so that the central vicinity in a front view protrudes forward from a contour portion in contact with the face.

### (Reference Example)

The mask in Reference Example is a flat gauze mask that is not folded into a pleated shape as in Examples 7 and 8.

### (Pressure loss (before load))

Each measurement sample was attached to a sample holder, the pressure on the inlet side was increased with a compressor, and the flow rate of permeating air was adjusted to 40 L/min with a flowmeter. The pressure loss at this time was measured using a differential pressure gauge.

### (Pressure loss when load of 200 mg of PAO particles was applied)

A load of 200 mg was applied to each measurement sample by continuously passing air containing polyalphaolefin particles having a number median diameter of 0.25 µm at a flow rate of 85 L/min. The pressure loss at this time was measured using a differential pressure gauge. The pressure loss at this time was converted to a pressure loss at a flow rate corresponding to 40 L/min from the velocity of air passing through the filter medium. The converted pressure loss was defined as a pressure loss given when air was passed at 40 L/min under a load of 200 mg.

### (Collection efficiency and permeability ratio before and after loading of 200 mg of PAO particles)

The collection efficiency was evaluated based on a pressure loss-increase test by applying a load of polyalphaolefin (PAO) particles (liquid particles). When air containing PAO particles was passed through each measurement sample at a flow rate of 85 L/min to apply a load, the permeability, the collection efficiency, and the permeability ratio were calculated from an upstream concentration C₁ and a downstream concentration C₂. $Permeability \left(%\right) = \left({C}_{2}/{C}_{1}\right) \times 100$ $Collection efficiency \left(%\right) = 100 - permeability \left(%\right)$$Permeability ratio = permeability \left(after loading\right) / permeability \left(before loading\right)$

The PAO particles were PAO particles (number median diameter: 0.25 µm) generated with a Laskin nozzle, and the concentration of the PAO particles was set to about 1,000,000 to 6,000,000/cm³. The collection efficiency was measured before loading, which indicates an initial state, and after loading, which indicates a state in which a load of 200 mg was applied by continuously passing air containing polyalphaolefin particles having a number median diameter of 0.25 µm at a flow rate of 85 L/min.

Furthermore, the permeability ratio (permeability after loading/permeability before loading), which is a value obtained by dividing, by a permeability in an initial state before loading, a permeability in a state in which a load of 200 mg was applied by continuously passing air containing polyalphaolefin particles having a number median diameter of 0.25 µm at a flow rate of 85 L/minute, was calculated.

### (Pressure loss when load of 100 mg of NaCl particles was applied)

A load of 100 mg was applied to the sample by continuously passing air containing NaCl particles having a number median diameter of 0.1 µm at a flow rate of 85 L/min. The pressure loss at this time was measured using a differential pressure gauge. The pressure loss at this time was converted to a pressure loss at a flow rate corresponding to 40 L/min from the velocity of air passing through the filter medium. The converted pressure loss was defined as a pressure loss given when air was passed at 40 L/min under a load of 100 mg.

For the pleated mask filter medium in Example 7, the pressure loss measured at a load of 100 mg of NaCl particles having a number median diameter of 0.1 µm was 123 Pa.

### (Collection efficiency before and after loading of 100 mg of NaCl particles)

For the sample attached to the sample holder, as in "Collection efficiency of NaCl particles having particle size of 0.1 µm in air filter medium" in Table 1, the collection efficiency was measured before loading, which indicates an initial state, and after loading, which indicates a state in which a load of 100 mg was applied by continuously passing air containing NaCl particles having a number median diameter of 0.1 µm at a flow rate of 85 L/min. For the pleated mask filter medium in Example 7, the collection efficiencies before and after a load of 100 mg of NaCl particles having a number median diameter of 0.1 µm was applied were measured. The collection efficiency of the pleated mask filter medium in Example 7 before loading was 99.065%. For the pleated mask filter medium in Example 7, the collection efficiency increased as the load of NaCl particles increased, and the collection efficiency after loading was higher than that before loading.

The physical properties in Examples 7 to 9, Comparative Example 7, and Reference Example are shown in Table below.

**[Table 2]**

| Items | Conditions | Unit | Example 7 | Example 8 | Example 9 | Compar ative example 7 | Reference Example |
|---|---|---|---|---|---|---|---|
| Pleat area | | cm² | 354 | 260 | 210 | 354 | 147 |
| Fold height | | mm | 12 | 10 | | 12 | |
| Number of pleats | | (-) | 22 | 21 | | 22 | |
| Opening area | | cm² | 45 | 38 | | 45 | |
| Pressure loss | 40L/min | (Pa) | 20 | 27 | 33 | 18 | 48 |
| Pressure loss at PAO 200mg load | 40L/min | (Pa) | 43 | 71 | 101 | 204 | 185 |
| PAO collection efficiency (before loading) | 85L/min | (%) | 99.775 | 99.732 | 99.695 | 99.263 | 99.64 |
| | 0.25µm | | | | | | |
| PAO collection efficiency (after loading) | 85L/min | (%) | 99.685 | 99.558 | 99.451 | 96.536 | 99.244 |
| | 0.25µm | | | | | | |
| PAO permeability ratio | Permeabilit y (after loading)/per meability (before loading) | (-) | 1.4 | 1.7 | 1.8 | 4.7 | 2.1 |

As is clear from Table 2, in Examples 7 to 9 in which production was performed using the air filter medium in Example 1, the increase in the pressure loss after a load of PAO particles was applied could be suppressed while the pressure loss of the mask before loading was decreased and a high collection efficiency was maintained.

In contrast, in Comparative Example 7 in which production was performed using the air filter medium in Comparative Example 2, the pressure loss at a load of 200 mg of PAO particles was considerably higher than the pressure loss before loading.

### REFERENCE SIGNS LIST

- 2: base
- 2a: opening
- 3: strap
- 20: pleated mask filter medium
- 30: air filter medium
- 31: fluororesin porous membrane
- 32: air-permeable supporting member (supporting member)

## Claims

1. An air filter medium (30) comprising:
a fluororesin porous membrane (31); and
a supporting member (32) stacked on at least one side of the fluororesin porous membrane,
wherein the fluororesin porous membrane has a pressure loss of 80 Pa or less when air is passed at a flow rate of 5.3 cm/s,
the fluororesin porous membrane has a thickness of 10 µm or more, and
a dust-holding capacity of polyalphaolefin particles having a number median diameter of 0.25 µm is 15.0 g/m² or more when air containing the polyalphaolefin particles is continuously passed through the fluororesin porous membrane at a flow rate of 5.3 cm/s and pressure loss increases by 250 Pa,
**characterized in that**
the fluororesin porous membrane has a PF of 20 or more, the PF being determined from a formula PF = {-log((100 - collection efficiency (%))/100)}/(pressure loss (Pa)/1000) using the pressure loss and a collection efficiency determined using NaCl particles having a particle size of 0.1 µm, and
the air filter medium being produced by a process involving step of forming a fluororesin sheet using a fluororesin raw material and a liquid lubricant with an amount set to 10 parts by weight or more and 40 parts by weight or less with respect to 100 parts by weight of the fluororesin;
the step of forming a sheet-shaped product involving extrusion and rolling under heating forming a film-like rolled product with a thickness being 100 µm or more and 400 µm or less;
removing the liquid lubricant by a heating and/or extracting method; and
a step of drawing the fluororesin sheet at a drawing speed of 30 %/s or less in a drawing direction,
wherein a total area drawing ratio is 250 times or more and 800 times or less,
the drawing speed being a value obtained by dividing a drawing ratio by the time required for the drawing, the drawing ratio being a ratio of the length after drawing to the length before drawing.

2. The air filter medium (30) according to claim 1, wherein
the fluororesin porous membrane has a thickness of 50 µm or less.

3. The air filter medium (30) according to claim 1 or 2, wherein
the fluororesin porous membrane contains a fibrillatable polytetrafluoroethylene, a non-fibrillatable non-melt-fabricable component, and a non-fibrillatable melt-fabricable component having a melting point of lower than 320°C, and
the fibrillatable polytetrafluoroethylene has a melt viscosity at 380°C of 1 × 10⁸ Pa·s or more,
the non-fibrillatable non-melt-fabricable component is a low-molecular-weight PTFE with thermoplasticity and has a number-average molecular weight of 600,000 or less, a melting point of 320°C or higher and 335°C or lower, and a melt viscosity at 380°C of 100 Pa·s to 7.0 × 10⁵ Pa·s, and
the non-fibrillatable melt-fabricable component having a melting point of lower than 320°C has a melt viscosity of less than 10000 Pa·s at 380°C.

4. The air filter medium (30) according to any one of claims 1 to 3, wherein
the fluororesin porous membrane contains a modified polytetrafluoroethylene.

5. A method for producing the air filter medium (30) according to any one of claims 1 to 4, the method comprising:
a step of forming a fluororesin sheet using a fluororesin raw material and a liquid lubricant with an amount set to 10 parts by weight or more and 40 parts by weight or less with respect to 100 parts by weight of the fluororesin;
the step of forming a sheet-shaped product involving extrusion and rolling under heating forming a film-like rolled product with a thickness 100 µm or more and 400 µm or less;
removing the liquid lubricant by a heating and/or extracting method;
a step of drawing the fluororesin sheet in a first direction, the step of drawing the fluororesin sheet in a first direction is at a drawing speed of 30 %/s or less in a drawing direction; and
after the step of drawing the fluororesin sheet in the first direction, a step of performing drawing in a second direction orthogonal to the first direction,
wherein a total area drawing ratio is 250 times or more and 800 times or less,
the drawing speed being a value obtained by dividing a drawing ratio by the time required for the drawing, the drawing ratio being a ratio of the length after drawing to the length before drawing.

6. A mask filter medium comprising the air filter medium according to any one of claims 1 to 4 or an air filter medium produced by the method according to claim 5.

7. A pleated mask filter medium (20) comprising the air filter medium according to any one of claims 1 to 4 or an air filter medium produced by the method according to claim 5, the air filter medium having a shape including a mountain fold portion and a valley fold portion,
wherein the fold height, which is a distance between a mountain fold portion and a valley fold portion adjacent to each other of the pleated mask filter medium, is 10 mm or more and 40 mm or less,
wherein when air containing polyalphaolefin particles having a number median diameter of 0.25 µm is continuously passed through the pleated mask filter medium at a flow rate of 85 L/min to apply a load of 200 mg of the polyalphaolefin particles, the pleated mask filter medium has a pressure loss of 120 Pa or less when air is passed at a flow rate of 40 L/min.

8. A use of an air filter medium (30) according to claim 1 for a mask.

## Patentansprüche

1. Luftfiltermedium (30), umfassend:
eine poröse Fluorharzmembran (31); und
ein Stützelement (32), das auf mindestens einer Seite der porösen Fluorharzmembran angeordnet ist,
wobei die poröse Fluorharzmembran einen Druckverlust von 80 Pa oder weniger aufweist, wenn Luft mit einer Strömungsgeschwindigkeit von 5,3 cm/s hindurchgeleitet wird,
die poröse Fluorharzmembran eine Dicke von 10 µm oder mehr aufweist, und
ein Staubspeichervermögen für Polyalphaolefin-Partikel, die einen zahlenmittleren Durchmesser von 0,25 µm aufweisen, 15,0 g/m² oder mehr beträgt, wenn die Polyalphaolefin-Partikel enthaltende Luft kontinuierlich mit einer Strömungsgeschwindigkeit von 5,3 cm/s durch die poröse Fluorharzmembran hindurchgeleitet wird und ein Druckverlust um 250 Pa ansteigt,
**dadurch gekennzeichnet, dass**
die poröse Fluorharzmembran einen PF von 20 oder mehr aufweist, wobei der PF aus einer Formel PF = {-log((100 - Abscheideleistung (%))/100)}/(Druckverlust (Pa)/1000) unter Verwendung des Druckverlusts und einer unter Verwendung von NaCl-Partikeln, die eine Partikelgröße von 0,1 µm aufweisen, bestimmten Abscheideleistung bestimmt wird, und
das Luftfiltermedium durch einen Prozess hergestellt wird, der einen Schritt zum Bilden eines Fluorharzblattes unter Verwendung eines Fluorharz-Rohmaterials und eines Flüssigschmiermittels mit einer Menge, die auf 10 Gewichtsteile oder mehr und 40 Gewichtsteile oder weniger, bezogen auf 100 Gewichtsteile des Fluorharzes, festgelegt ist, einbezieht;
den Schritt zum Bilden eines blattförmigen Produkts, der Extrudieren und Walzen unter Erwärmung einbezieht, wodurch ein folienartiges Walzprodukt mit einer Dicke gebildet wird, die 100 µm oder mehr und 400 µm oder weniger beträgt;
Entfernen des Flüssigschmiermittels durch ein Erwärmungs- und/oder Extrusionsverfahren; und
einen Schritt zum Strecken des Fluorharzblattes mit einer Streckgeschwindigkeit von 30 %/s oder weniger in einer Streckrichtung,
wobei ein Gesamtflächenstreckverhältnis 250-mal oder mehr und 800-mal oder weniger ist,
wobei die Streckgeschwindigkeit ein Wert ist, der durch Teilen eines Streckverhältnisses durch die für das Strecken erforderliche Zeit erhalten wird, wobei das Streckverhältnis ein Verhältnis der Länge nach dem Strecken zur Länge vor dem Strecken ist.

2. Luftfiltermedium (30) nach Anspruch 1, wobei
die poröse Fluorharzmembran eine Dicke von 50 µm oder weniger aufweist.

3. Luftfiltermedium (30) nach Anspruch 1 oder 2, wobei
die poröse Fluorharzmembran ein fibrillierbares Polytetrafluorethylen, eine nicht fibrillierbare, nicht schmelzverarbeitbare Komponente und eine nicht fibrillierbare, schmelzverarbeitbare Komponente enthält, die einen Schmelzpunkt von unter 320 °C aufweist, und
das fibrillierbare Polytetrafluorethylen eine Schmelzviskosität bei 380 °C von 1 × 10⁸ Pa·s oder mehr aufweist,
die nicht fibrillierbare, nicht schmelzverarbeitbare Komponente ein niedermolekulares PTFE mit Thermoplastizität ist und ein zahlenmittleres Molekulargewicht von 600.000 oder weniger, einen Schmelzpunkt von 320 °C oder höher und 335 °C oder niedriger und eine Schmelzviskosität bei 380 °C von 100 Pa·s bis 7,0 × 10⁵ Pa·s aufweist, und
die nicht fibrillierbare, schmelzverarbeitbare Komponente, die einen Schmelzpunkt von unter 320 °C aufweist, eine Schmelzviskosität von weniger als 10000 Pa·s bei 380 °C aufweist.

4. Luftfiltermedium (30) nach einem der Ansprüche 1 bis 3, wobei die poröse Fluorharzmembran ein modifiziertes Polytetrafluorethylen enthält.

5. Verfahren zur Herstellung des Luftfiltermediums (30) nach einem der Ansprüche 1 bis 4, wobei das Verfahren umfasst:
einen Schritt zum Bilden eines Fluorharzblattes unter Verwendung eines Fluorharz-Rohmaterials und eines Flüssigschmiermittels mit einer Menge, die auf 10 Gewichtsteile oder mehr und 40 Gewichtsteile oder weniger, bezogen auf 100 Gewichtsteile des Fluorharzes, festgelegt ist;
den Schritt zum Bilden eines blattförmigen Produkts, der Extrudieren und Walzen unter Erwärmung einbezieht, wodurch ein folienartiges Walzprodukt mit einer Dicke von 100 µm oder mehr und 400 µm oder weniger gebildet wird;
Entfernen des Flüssigschmiermittels durch ein Erwärmungs- und/oder Extrusionsverfahren;
einen Schritt zum Strecken des Fluorharzblattes in einer ersten Richtung, wobei der Schritt zum Strecken des Fluorharzblattes in einer ersten Richtung mit einer Streckgeschwindigkeit von 30 %/s oder weniger in einer Streckrichtung erfolgt; und
nach dem Schritt zum Strecken des Fluorharzblattes in der ersten Richtung einen Schritt zum Durchführen des Streckens in einer zweiten Richtung orthogonal zur ersten Richtung,
wobei ein Gesamtflächenstreckverhältnis 250-mal oder mehr und 800-mal oder weniger ist,
wobei die Streckgeschwindigkeit ein Wert ist, der durch Teilen eines Streckverhältnisses durch die für das Strecken erforderliche Zeit erhalten wird, wobei das Streckverhältnis ein Verhältnis der Länge nach dem Strecken zur Länge vor dem Strecken ist.

6. Maskenfiltermedium, umfassend das Luftfiltermedium nach einem der Ansprüche 1 bis 4 oder ein Luftfiltermedium, das durch das Verfahren nach Anspruch 5 hergestellt wird.

7. Faltenmaskenfiltermedium (20), umfassend das Luftfiltermedium nach einem der Ansprüche 1 bis 4 oder ein Luftfiltermedium, das durch das Verfahren nach Anspruch 5 hergestellt wird, wobei das Luftfiltermedium eine Form aufweist, die einen Bergfaltenabschnitt und einen Talfaltenabschnitt einschließt,
wobei die Faltenhöhe, die ein Abstand zwischen einem Bergfaltenabschnitt und einem Talfaltenabschnitt ist, die in dem Faltenmaskenfiltermedium benachbart zueinander sind, 10 mm oder mehr und 40 mm oder weniger beträgt,
wobei, wenn Luft, die Polyalphaolefin-Partikel enthält, die einen zahlenmittleren Durchmesser von 0,25 µm aufweisen, kontinuierlich mit einer Strömungsgeschwindigkeit von 85 L/min durch das Faltenmaskenfiltermedium hindurchgeleitet wird, um eine Belastung von 200 mg der Polyalphaolefin-Partikel aufzubringen, das Faltenmaskenfiltermedium einen Druckverlust von 120 Pa oder weniger aufweist, wenn Luft mit einer Strömungsgeschwindigkeit von 40 L/min hindurchgeleitet wird.

8. Verwendung eines Luftfiltermediums (30) nach Anspruch 1 für eine Maske.

## Revendications

1. Milieu (30) de filtre à air comprenant :
une membrane (31) poreuse en fluororésine ; et
un élément (32) de support empilé sur au moins un côté de la membrane poreuse en fluororésine,
dans lequel la membrane poreuse en fluororésine présente une perte de pression de 80 Pa ou moins lorsque de l'air est passé à un débit de 5,3 cm/s,
la membrane poreuse en fluororésine présente une épaisseur de 10 µm ou plus, et
une capacité de rétention de poussières de particules de polyalphaoléfine présentant un diamètre médian en nombre de 0,25 µm est de 15,0 g/m² ou plus lorsque de l'air contenant les particules de polyalphaoléfine est passé en continu à travers la membrane poreuse en fluororésine à un débit de 5,3 cm/s et que la perte de pression augmente de 250 Pa,
**caractérisé en ce que**
la membrane poreuse en fluororésine présente un PF de 20 ou plus, le PF étant déterminé à partir d'une formule PF = {-log((100 - efficacité de collecte (%))/100)}/(perte de pression (Pa)/1 000) en utilisant la perte de pression et une efficacité de collecte déterminée en utilisant des particules de NaCl présentant une taille de particule de 0,1 µm, et
le milieu de filtre à air étant produit par un processus impliquant une étape de formation d'une feuille de fluororésine utilisant une matière première de fluororésine et un lubrifiant liquide avec une quantité fixée à 10 parties en poids ou plus et 40 parties en poids ou moins par rapport à 100 parties en poids de la fluororésine ;
l'étape de formation d'un produit en forme de feuille impliquant une extrusion et un laminage sous chauffage formant un produit laminé de type film avec une épaisseur étant de 100 µm ou plus et de 400 µm ou moins ;
l'élimination du lubrifiant liquide par un procédé de chauffage et/ou d'extraction ; et
une étape d'étirage de la feuille de fluororésine à une vitesse d'étirage de 30 %/s ou moins dans une direction d'étirage,
dans lequel un rapport d'étirage surfacique total est de 250 fois ou plus et de 800 fois ou moins,
la vitesse d'étirage étant une valeur obtenue en divisant un rapport d'étirage par le temps requis pour l'étirage, le rapport d'étirage étant un rapport de la longueur après étirage à la longueur avant étirage.

2. Milieu (30) de filtre à air selon la revendication 1, dans lequel la membrane poreuse en fluororésine présente une épaisseur de 50 µm ou moins.

3. Milieu (30) de filtre à air selon la revendication 1 ou la revendication 2, dans lequel
la membrane poreuse en fluororésine contient un polytétrafluoroéthylène fibrillable, un composant ne pouvant pas être fabriqué à l'état fondu et non fibrillable, et un composant pouvant être fabriqué à l'état fondu et non fibrillable présentant un point de fusion inférieur à 320 °C, et
le polytétrafluoroéthylène fibrillable présente une viscosité à l'état fondu à 380 °C de 1 × 10⁸ Pa·s ou plus,
le composant ne pouvant pas être fabriqué à l'état fondu et non fibrillable est un PTFE de faible poids moléculaire avec thermoplasticité et présente un poids moléculaire moyen en nombre de 600 000 ou moins, un point de fusion de 320 °C ou plus et 335 °C ou moins, et une viscosité à l'état fondu à 380 °C de 100 Pa·s à 7,0 × 10⁵ Pa·s, et
le composant pouvant être fabriqué à l'état fondu et non fibrillable présentant un point de fusion inférieur à 320 °C présente une viscosité à l'état fondu inférieure à 10 000 Pa·s à 380 °C.

4. Milieu (30) de filtre à air selon l'une quelconque des revendications 1 à 3, dans lequel
la membrane poreuse en fluororésine contient un polytétrafluoroéthylène modifié.

5. Procédé de production du milieu (30) de filtre à air selon l'une quelconque des revendications 1 à 4, le procédé comprenant :
une étape de formation d'une feuille de fluororésine utilisant une matière première de fluororésine et un lubrifiant liquide avec une quantité fixée à 10 parties en poids ou plus et 40 parties en poids ou moins par rapport à 100 parties en poids de la fluororésine ;
l'étape de formation d'un produit en forme de feuille impliquant une extrusion et un laminage sous chauffage formant un produit laminé de type film avec une épaisseur de 100 µm ou plus et 400 µm ou moins ;
l'élimination du lubrifiant liquide par un procédé de chauffage et/ou d'extraction ;
une étape d'étirage de la feuille de fluororésine dans une première direction, l'étape d'étirage de la feuille de fluororésine dans une première direction étant à une vitesse d'étirage de 30 %/s ou moins dans une direction d'étirage ; et
après l'étape d'étirage de la feuille de fluororésine dans la première direction, une étape de réalisation d'un étirage dans une deuxième direction orthogonale à la première direction,
dans lequel un rapport d'étirage surfacique total est de 250 fois ou plus et de 800 fois ou moins,
la vitesse d'étirage étant une valeur obtenue en divisant un rapport d'étirage par le temps requis pour l'étirage, le rapport d'étirage étant un rapport de la longueur après étirage à la longueur avant étirage.

6. Milieu de filtre pour masque comprenant le milieu de filtre à air selon l'une quelconque des revendications 1 à 4 ou un milieu de filtre à air produit par le procédé selon la revendication 5.

7. Milieu (20) de filtre pour masque plissé comprenant le milieu de filtre à air selon l'une quelconque des revendications 1 à 4 ou un milieu de filtre à air produit par le procédé selon la revendication 5, le milieu de filtre à air présentant une forme incluant une portion de pliage de montagne et une portion de pliage de vallée,
dans lequel la hauteur de pliage, qui est une distance entre une portion de pliage de montagne et une portion de pliage de vallée adjacentes l'une à l'autre du milieu de filtre pour masque plissé, est de 10 mm ou plus et de 40 mm ou moins,
dans lequel, lorsque de l'air contenant des particules de polyalphaoléfine présentant un diamètre médian en nombre de 0,25 µm est passé en continu à travers le milieu de filtre pour masque plissé à un débit de 85 L/min pour appliquer une charge de 200 mg des particules de polyalphaoléfine, le milieu de filtre pour masque plissé présente une perte de pression de 120 Pa ou moins lorsque de l'air est passé à un débit de 40 L/min.

8. Utilisation d'un milieu (30) de filtre à air selon la revendication 1 pour un masque.
